Europäisches Patentamt

European Patent Office

Office européen des brevets

(11) Publication number: **0 657 664 A1**

# EUROPEAN PATENT APPLICATION

(21) Application number: **94117107.6**

(22) Date of filing: **28.10.94**

(51) Int. Cl.⁶: **F16H 25/16**, F16H 53/08,
F16H 27/02

(30) Priority: **12.11.93 JP 283742/93**
**18.02.94 JP 21313/94**

(43) Date of publication of application:
**14.06.95 Bulletin 95/24**

(84) Designated Contracting States:
**DE FR GB IT SE**

(71) Applicant: **MITSUHASHI CORPORATION**
**1, Sekizan-cho,**
**Yamanouchi,**
**Ukyo-ku**
**Kyoto-shi,**
**Kyoto (JP)**

(72) Inventor: **Uemura, Yasuhiro**
**36-1 Nishikawara-cho,**
**Fukakusa,**
**Fushimi-ku**
**Kyoto-shi,**
**Kyoto (JP)**

(74) Representative: **TER MEER - MÜLLER -**
**STEINMEISTER & PARTNER**
**Mauerkircherstrasse 45**
**D-81679 München (DE)**

(54) Cam apparatus.

(57) A cam apparatus for transforming a linear motion into a rotational motion. The cam apparatus (1) within the start region or upon stoppage of a driving cylinder (4) serves as a drive member. A rotatable turret (2) serving as a follower member with follower rollers (22) is caused to confront a flat portion (10) of a slider (8). The shape of the cams or lobes improves the starting phase.

FIG.1

The present invention relates to cam apparatus and more particularly to a cam apparatus which converts expansion motion of a piston of a cylinder into rotational motion of a turret.

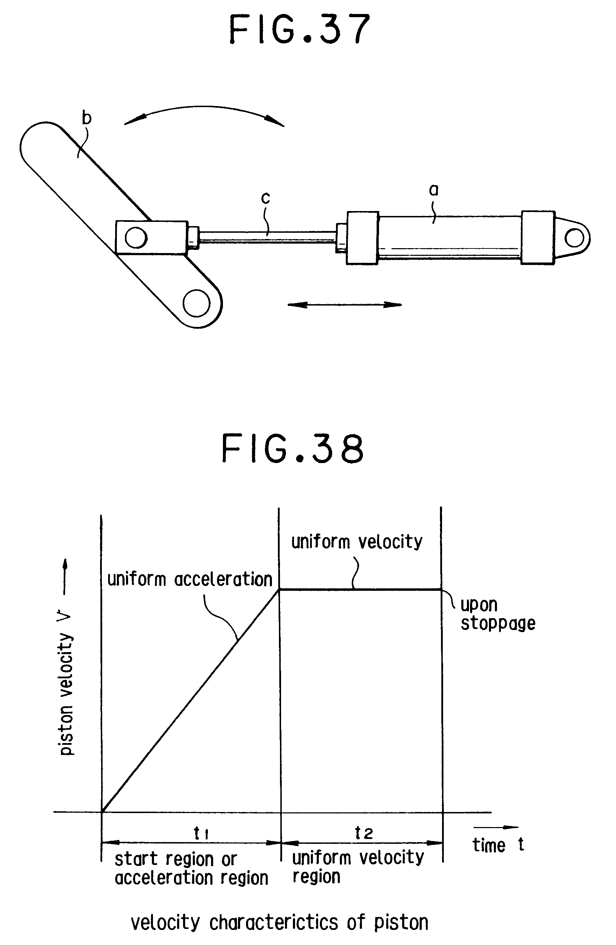

Needless to give an example as shown in Fig.37, a variety of types of mechanisms have been proposed which perform rotational motion of a rotary rod b serving as a follower member by utilizing expansion motion of a piston c of a cylinder a serving as both a drive member and a reciprocating engine.

However, as will be seen from Fig.38 being a graphical representation showing motion characteristics of the piston, the cylinder a is started gradually within a uniform acceleration region of the piston c (this region will hereinafter be called a "start region" because the piston is about to start in this region. This region can also be called an "acceleration region" because the piston c is accelerated within the start region) and thereafter undergoes uniform velocity motion within a predetermined region (hereinafter, this region will be called a "uniform velocity region") to collide with a cylinder case while being moved at a velocity so as to stop eventually. For convenience of explanation, the time that the piston collides with the cylinder case and stops will be referred to as "upon stoppage". Accordingly, within the start region and upon stoppage, vibrations and shocks are caused, giving rise to a prior art problem that the follower member is prevented from smooth rotational motion at the beginning of its rotation and at the end of its rotation.

The present invention intends to solve the above problem and it is an object of the invention to provide a cam apparatus which can apply constantly stable rotation to the turret standing for the follower member and can convert reciprocating motion into rotational motion without resort to complicated controlling.

A cam apparatus according to the present invention comprises a rotatable turret serving as a follower member, a reciprocating engine serving as a motivator member for applying power to the turret, and a slider connected to a piston of the reciprocating engine to convert expansion motion of the piston into rotational motion of the turret and movable, together with the piston, relative to the turret. The slider is formed with flat portions at opposite end parts and a cam portion shaped to have a hill-valley form at a central part in a direction of travel of the slider, and the turret has a plurality of rollers arranged at the circumferential periphery of the turret and being in contact with the slider so as to roll in accordance with the movement of the slider. These rollers prevent rotation of the turret when the flat portion of the slider is positioned by the expansion motion of the piston to confront the turret but rotation of the rollers cooperate with a travel or procession of the slider and the hill-valley shape of the cam portion to rotate the turret in a rotation direction conforming to the expansion motion of the piston when the cam portion of the slider is moved by the expansion motion of the piston to a position at which the cam portion comes into contact with the rollers of the turret, and the turret is confronted with the flat portion of the slider within the start region or upon stoppage of the reciprocating engine.

Accordingly, according to the cam apparatus of the present invention, the turret is prevented by the plurality of rollers from rotating when the turret is positioned at the flat portion of the slider and is confronted with the flat portion within the start region or upon stoppage of the piston, so that even when the turret receives shocks generated within the start region or upon stoppage, the rotation of the turret is never affected by the shocks since the turrent does not rotate inherently at the flat portion.

Fig.1 is a perspective view showing the whole of a cam apparatus.

Fig.2 is a side view showing the whole of the cam apparatus.

Fig.3 is a diagram showing the cam apparatus as viewed in the direction of arrow III of Fig. 2.

Fig.4 is a diagram illustrative of operation to indicate a state in which a procession of a piston causes a slider to rotate a turret, showing a state of rotational phase 1 of the turret.

Fig.5 is a diagram illustrative of operation to indicate a state in which a procession of the piston causes the slider to rotate the turret, showing a state of rotational phase 2 of the turret.

Fig.6 is a diagram illustrative of operation to indicate a state in which a procession of the piston causes the slider to rotate the turret, showing a state of rotational phase 3 of the turret.

Fig.7 is a diagram illustrative of operation to indicate a state in which a procession of the piston causes the slider to rotate the turret, showing a state of rotational phase 4 of the turret.

Fig.8 is a diagram illustrative of operation to indicate a state in which a procession of the piston causes the slider to rotate the turret, showing a state of rotational phase 5 of the turret.

Fig.9 is a diagram illustrative of operation to indicate a state in which a procession of the piston causes the slider to rotate the turret, showing a state of rotational phase 6 of the turret.

Fig.10 is a diagram illustrative of operation to indicate a state in which a procession of the piston causes the slider to rotate the turret, showing a state of rotational phase 7 of the turret.

Fig.11 is a diagram illustrative of operation to indicate a state in which a procession of the piston causes the slider to rotate the turret, showing a state of rotational phase 8 of the turret.

Fig.12 is a diagram illustrative of operation to indicate a state in which a procession of the piston causes the slider to rotate the turret, showing a state of rotational phase 9 of the turret.

Fig.13 is a diagram illustrative of operation to indicate a state in which a procession of the piston causes the slider to rotate the turret, showing a state of rotational phase 10 of the turret.

Fig.14 is a diagram illstrative of operation to indicate a state in which a procession of the piston causes the slider to rotate the turret, showing a state of rotational phase 11 of the turret.

Fig.15 is a diagram illustrative of operation to indicate a state in which a procession of the piston causes the slider to rotate the turret, showing a state of rotational phase 12 of the turret.

Fig.16 is a diagram illustrative of operation to indicate a state in which a procession of the piston causes the slider to rotate the turret, showing a state of rotational phase 13 of the turret.

Fig.17 is a graph showing the case where a rotary motion curve drawn or traced by the turret assumes a modified sine curve depending on the shape of a cam portion.

Fig.18 is a circuit diagram showing the operation of an air cylinder.

Fig.19 is a graph showing motion characteristics of piston based on a specified example.

Fig.20 a diagram useful to explain an XY coordinate system for determining the shape of the cam portion of the cam apparatus according to the invention and an origin line.

Fig.21 is a vector diagram showing an example of determining locus of the center of a roller when six rollers are arranged at equal angular intervals.

Fig.22 is a diagram showing an example of the case where eight rollers are arranged at equal angular intervals.

Fig.23 is a diagram usful to explain a example of determining cam contours from the roller center loci.

Fig.24 is a diagram useful to explain an example of determining a cam contour directly from a vector diagram showing the cam contour.

Fig.25 is a diagram showing the case where the indexing angle of the turret is 45°.

Fig.26 is a diagram showing the case where the indexing angle of the turret is 60°.

Fig.27 is a diagram showing the case where the indexing angle of the turret is 90°.

Fig.28 is a diagram showing the case where the indexing angle of the turret is 135°.

Fig.29 is a diagram showing the case where the indexing angle of the turret is 180°.

Fig.30 is a diagram showing the case where the indexing angle of the turret is 225°.

Fig.31 is a diagram showing the case where the indexing angle of the turret is 240°.

Fig.32 is a diagram showing the case where the indexing angle of the turret is 270°.

Fig.33 is a diagram showing the case where the indexing angle of the turret is 300°.

Fig.34 is a diagram showing the case where the indexing angle of the turret is 315°.

Fig.35 is a diagram showing the case where the indexing angle of the turret is 360°.

Fig.36 is a graph showing the case where the hill-valley shape of the cam portion causes the turret to draw a rotational motion curve which is a modified uniform velocity curve .

Fig.37 is a diagram for explaining the prior art.

Fig.38 is a graph showing motion characteristics of a general piston.

(Embodiment 1)

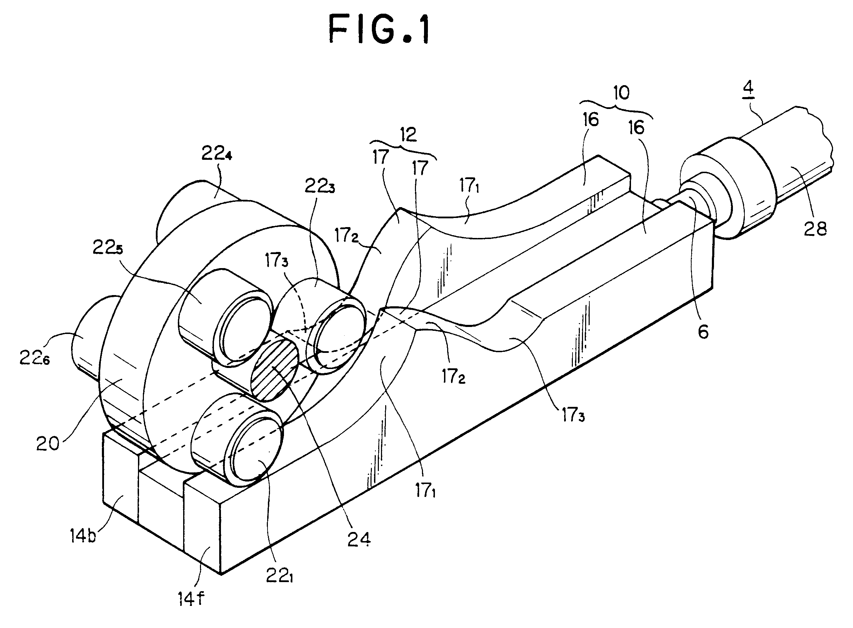

As will be seen from Figs.1 to 3, a cam apparatus 1 has a turret 2 serving as a follower member which is rotatable clockwise or counterclockwise (hereinafter, the clockwise or counterclockwise rotational operation is simply referred to as "rotation"), a cylinder 4 in the form of an reciprocating engine serving as a motivator member for causing the turret 2 to rotate, and a slider 8 serving as a rectilinear motion cam which is connected to a piston 6 of the cylinder 4 to convert expansion motion of the piston 6 into rotation of the turret 2 and moves, together with the piston 6, in relation to the turret 2. These constituent members are mounted to a housing not shown.

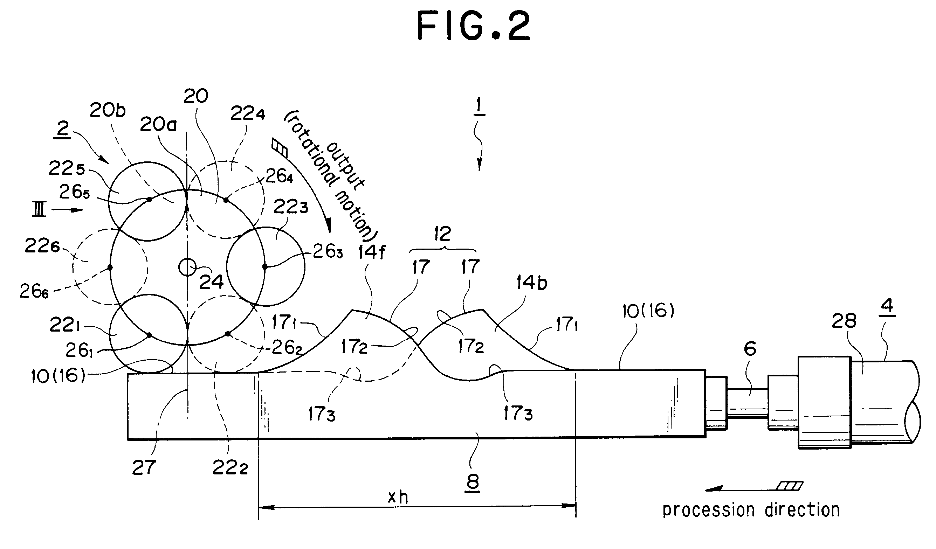

The slider 8 is a sliding member formed with flat portions 10, 10 at oppostie end parts and a cam portion 12 at a central part in a direction of travel (longitudinal direction) of the slider as shown in Fig.2. The slider 8 moves along a guide, not shown, of the housing to make rectilinear reciprocation in accordance with the expansion motion of the piston 6 over a predetermined region defined by a length of stroke of the piston 6, so that the turret 2 can be rotated by the rectilinear reciprocation.

Concrete details of how the turret 2 is rotated in relation to the slider 8 will be gradually clarified from a description to be given hereinafter.

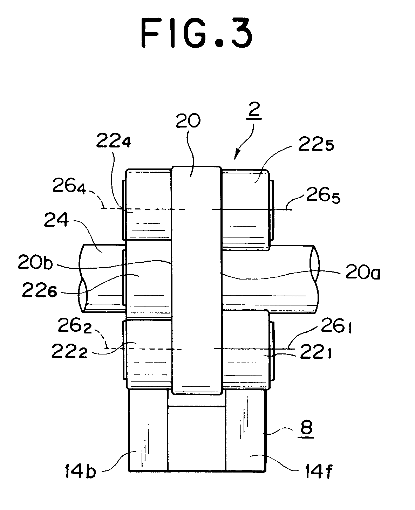

Referring in particular to Figs.1 and 3, the slider 8 has two plate cams 14f and 14b disposed in parallel to each other to extend in the travel direction of the slider. The two plate cams 14f and 14b are spaced apart from each other by a spacing which is slightly larger than a thickness of a rotary disk of turret 2 to be described later. As viewed in the normal direction of sheet of drawing of Fig.2, the plate cams 14f and 14b correspond to ae frontal one and a back one, respectively. And in Figs. 3 to 16, the plate cams 14f and 14b

3

are depicted by solid line and dotted line respectively.

Since the plate cams 14f and 14b are substantially symmetrical with respect to a line as seen in plan view of Fig.2, one plate cam 14f alone will be described.

The plate cam 14f is formed with flat regions 16, 16 at opposite end parts and a hill-valley shaped region 17 at a central part in the longitudinal direction of the plate cam. The plate cams 14f and 14b are used in combination to fulfil the function of the aforementioned flat portions 10, 10 at their flat regions 16, 16 and 16, 16 and the function of the aforementioned cam portion 12 at their hill-valley shaped regions 17 and 17. A length over which the cam portion 12 is formed in the longitudinal direction of slider 8 is termed a cam allotting length $x_h$ and this cam allotting length $x_h$ substantially corresponds to the uniform velocity region of cylinder 4 (already described in Description of the Prior Art).

As shown in Figs.1 to 3, the hill-valley shaped region 17 has a ridgeline consisting of a first arcuate portion $17_1$ having a downwardly convex arcuate form which is continuous to the left flat region 16 and rises therefrom, a second arcuate portion $17_2$ having an upwardly convex arcuate form which is continuous to the first arcuate region $17_1$ and corresponds to the 1/4 period of a so-called sine curve, and a third arcuate region $17_3$ having an downwardly convex, gradually arcuate form which is continuous to the second arcuate region $17_2$, is positioned below the right flat region 16 and terminates continuously in the right flat region 16. The ridgeline is substantially has the form of a wave as a whole.

The hill-valley shaped region 17 has a wavy form as described above and therefore, when the slider 8 having the plate cams 14f and 14b which are shaped in line symmetrical fashion as described previously is rectilinearly reciprocated by the cylinder 4, follower rollers $22_1$, $22_2$, ..... of turret 2 to be described later are so displaced as to be sequentially alternately paid out, with the result that the turret 2 can be rotated in a direction conforming to the rectilinear reciprocation of the slider 8. More specifically, as the piston 6 expands and the slider 8 moves from right to left as viewed in Fig.2, the turret 2 is rotated clockwise as viewed in Fig.2 and conversely, as the piston 6 contracts and the slider 8 moves from left to right, the turret 2, which has been rotated clockwise, is caused to rotate counterclockwise.

As will be seen from Figs.1 and 3, the turret 2 is essentially comprised of a rotary disk 20 and a plurality of rollers $22_1$, $22_2$, ..... which are provided alternately on front and back surfaces 20a and 20b of rotary disk 20 along peripheral edges thereof, brought into contact with the flat portions 10, 10 and the cam portion 12 and rolled in accordance with the rectilinear reciprocation of the slider 8 (as illustrated, in the present embodiment, three rollers are provided on each of the front and back surfaces 20a and 20b of the rotary disk 20, totalling to six).

In this embodiment 1, since the turret 2 standing for a follower member is exemplarily rotatable within a range of 120°, the number of rollers 22 is six and the number of hill-valleys of the hill-valley shaped region 17 of the cam portion 12 of slider 8 is two. However, in an instance where the turret 2 is allowed to rotate within a range of other angle than the above, the number of rollers 22 and the number of hill-valleys of the hill-valley shaped region 17 are changed to meet the rotation range. The angle indicating the rotation range, 120° as above, will be referred to as an "indexing angle" hereinafter.

A rotary shaft 24 is fixed to the rotary disk 20 at the center thereof and is rotatably mounted to the housing through bearings not shown.

As shown in Figs.1 to 3, of the rollers $22_1$, $22_2$, ..... the respective rollers $22_1$, $22_3$ and $22_5$ on the front surface 20a (depicted by solid line in the Figure) are rotatably mounted on center shafts $26_1$, $26_3$, and $26_5$ - (depicted by solid line in the Figure) arranged along the peripheral edge of the rotary disk 20 at angular intervals of 120° and the respective rollers $22_2$, $22_4$, $22_6$ on the back surface 20b (depicted by dotted line in the Figure) are arranged along the peripheral edge of the rotary disk 20 at angular intervals of 120° so as to intervene between the rollers $22_1$ and $22_3$, the rollers $22_3$ and $22_5$ and the rollers $22_5$ and $22_1$ on the front surface 20a and are rotatably mounted on center shafts $26_2$, $26_4$ and $26_6$ (depicted by dotted line in the Figure) which are 60° dephased from the shafts $26_1$, $26_3$ and $26_5$, respectively.

Accordingly, as will be seen from Figs.1 to 16, the individual rollers $22_1$, $22_2$ ..... on the front and back surfces 20a and 20b of the turret 2 are so seen as to be arranged along the peripheral edge of the rotary disk 20 at angular intervals of 60° when seen in plan view.

Part of the rollers $22_1$, $22_2$ ....., that is, the rollers $22_1$ and $22_2$ or the rollers $22_3$ and $22_4$ act cooperatively depressively to prevent the turret 2 from rotating when the expansion motion of the piston 6 causes the flat portion 10, 10 of the slider 8 to be positioned at a site where the flat portion 10, 10 confronts the turret 2 but as the expansion motion of the piston 6 causes the cam portion 12 of the slider 8 to proceed to a site where the cam portion 12 contacts any one of the rollers 22 of the turret 2, the procession of the slider 8, the hill-valley shape of the cam portion 12 and rotation of the roller 22 cooperate with each other to rotate the turret 2 in a rotation direction conforming to the expansion motion of the piston 6. And said plurality of rollers $22_1$, $22_2$,... have their radii being equal to each other.

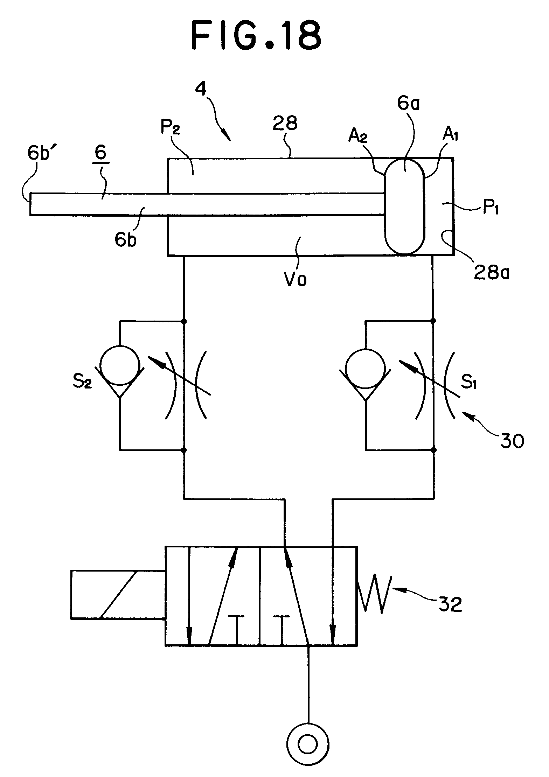

In the cylinder 4, the piston 6 is reciprocative inside a cylinder cover 28. As shown in Fig.18, the piston 6 has a piston head 6a and a piston rod 6b. A tip end portion 6b' of the piston rod 6b is fixed to one longitudinal end of the slider 8 by suitable fixing means, thereby making the piston 6 and the slider 8 integral. Also, as best seen in Fig.18, the piston 6 is reciprocated through a velocity control valve 30 and a switching valve 32. The remaining reference numerals in Fig.18 have meanings as will be described later.

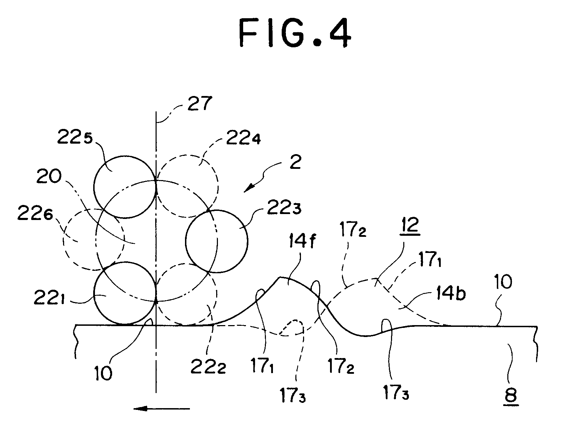

Then, in the cam apparatus 1 constructed as above, the turrent 2 is rotated in order of the following phases 1 to 13 (see Figs.4 to 16). Phases 1 to 13 take place in the forward stroke of the piston 6 (movement from right to left in Figs.4 to 16) and the phases in the backward stroke are simple inversion of the phases 1 to 13 and will not be described.

(Phase 1: see Fig.4)

Since the piston 6 contracts and does not move by itself, the turret 2 is not in motion, either. The rollers $22_1$ and $22_2$ are in contact with only the left flat portion 10.

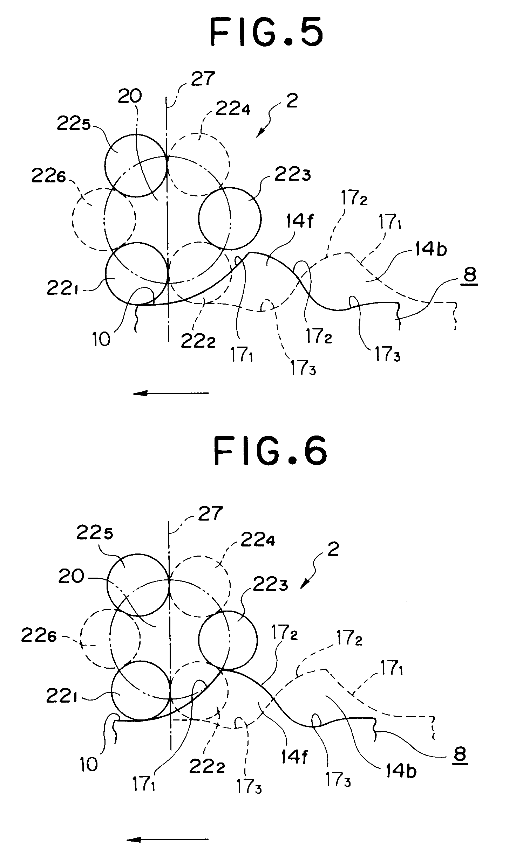

(Phase 2: see Fig.5)

As the piston 6 slightly expands and the slider 8 proceeds from right to left in accordance with an expansion amount of the slider, the rollers $22_1$ and $22_2$ of the turret 2 are rolled on the left flat portion 10, causing the turret 2 to approach the cam portion 12 while keeping the rotary disk 20 not rotated. Under this travel or procession condition, the roller $22_1$ is positioned on the left side and the the roller $22_2$ is positioned on the right side of a virtual vertical line 27 assumed, for convenience, to pass through the center of the turret 2 and hence the rotary disk 20 is inhibited from moving clockwise and counterclockwise and so prevented from rotating. Consequently, at the left flat portion 10, the rectilinear motion of the slider 8 brings about only rotation of the rollers $22_1$ and $22_2$, so that the rotary disk 20 of the turret 2 is not moved to rotate but is caused to dwell. The dwell condition is designed to correspond to the start region in which the piston 6 starts traveling gradually at uniform acceleration (the start region has already been described in Description of the Prior Art). The dwell condition can be set to meet load characteristics of the cylinder 4.

Under the condition of phase 2, the procession of the slider 8, the rotation angle of the turret 2 and the required time which are removed of dimension or made to be non-dimensional are rendered to be zero. Then, as to the procession of the slider 8 and the rotation angle of the turret 2 in individual phases as well as the time required for the turret to acquire a necessary rotation angle in the individual phases, their values will be enumerated at the end of a description of each corresponding phase. The removal of dimension means a non-unit indication system in which the maximum value of each of the procession of the slider 8, rotation angle of the turret 2 (the maximum rotation angle equals 120°) and time required for the rotation angle is set to 1 (one).

After going through the start region, the piston 6 moves at a uniform velocity (uniform velocity motion has already been described in Descrioption of the Prior Art). The piston 6 moving at the velocity collides with an end surface 28a of cylinder cover 28 (see Fig.18) and stops. In phases 3 to 13 to be described below, the piston 6 travels in the uniform velocity region.

(Phase 3: see Fig.6)

As the piston 6 further expands, the rollers $22_1$ and $22_2$ being in contact with the left flat portion 10 gradually come into contact with the cam portion 12, so that the roller $22_1$ contacts the first arcuate region $17_1$ of hill-valley shaped region 17 of the plate cam 14f to start ascending and at the same time, the roller $22_2$ contacts the third arcuate region $17_3$ of hill-valley shaped region 17 of the plate cam 14b to start descending.

procession···0.1, rotation angle···0.011, required time···0.1

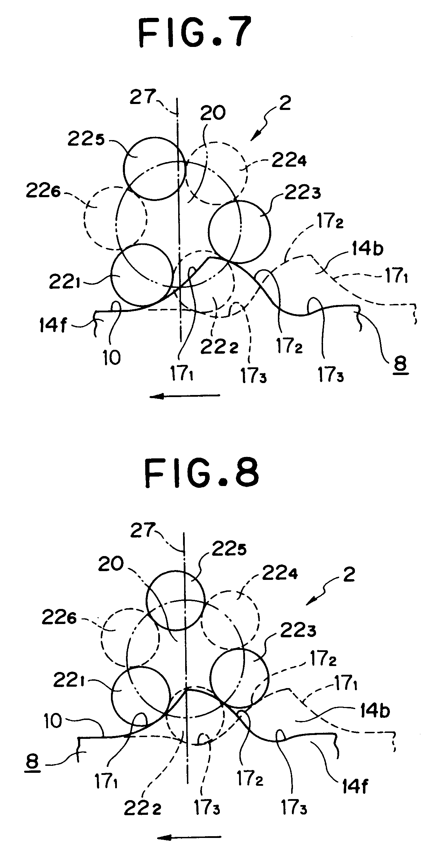

(Phase 4: see Fig.7)

The roller $22_1$ ascends the first arcuate region $17_1$ of the cam 14f and the roller $22_2$ descends the third arcuate region $17_3$ of the plate cam 14b. The roller $22_3$, on the other hand, is about to descend the second arcuate region $17_2$ of the plate cam 14f.

procession···0.2, rotation angle···0.068, required time···0.2

(Phase 5: see Fig.8)

The roller $22_1$ is still on the way of ascending the first arcuate region $17_1$ of the plate cam 14f and the roller $22_2$ is about to finish descending the second arcuate region $17_2$ of the plate cam 14b. The roller $22_3$ is in the midst of descending the second arcuate region $17_2$ of the cam 14f.

procession・・・0.3, rotation angle・・・0.178, required time・・・0.3

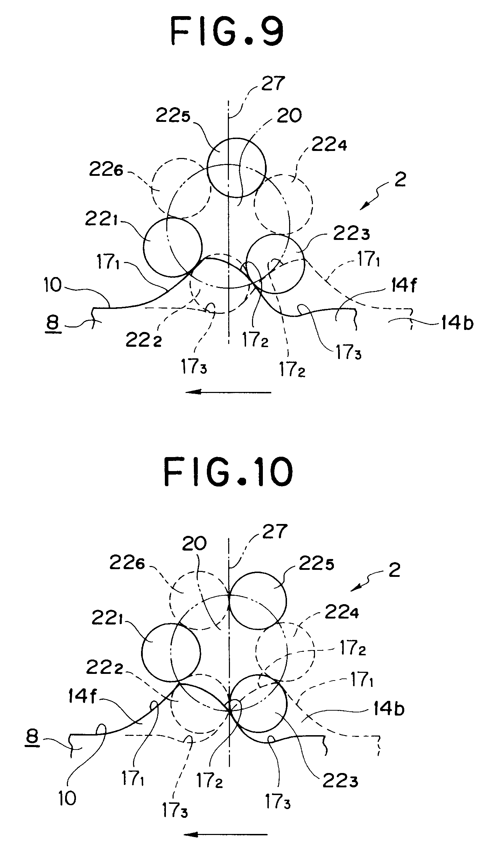

(Phase 6: see Fig.9)

The roller $22_1$ is about to finish ascending the first arcuate region $17_1$ of the cam 14f and the roller $22_2$ starts ascending the second arcuate region $17_2$ of the plate cam 14b. The roller $22_3$ is still in the midst of descending the second arcuate region $17_2$ of the cam 14f.

procession・・・0.4, rotation angle・・・0.328, required time・・・0.4

(Phase 7: see Fig.10)

The roller $22_1$ completes ascending the first arcuate region $17_1$ of the cam 14f and the roller $22_2$ is on the way of ascending the second arcuate region $17_2$ of the plate cam 14b. The roller $22_3$ is still on the way of descending the second arcuate region $17_2$ of the cam 14f.

procession・・・0.5, rotation angle・・・0.5, required time・・・0.5

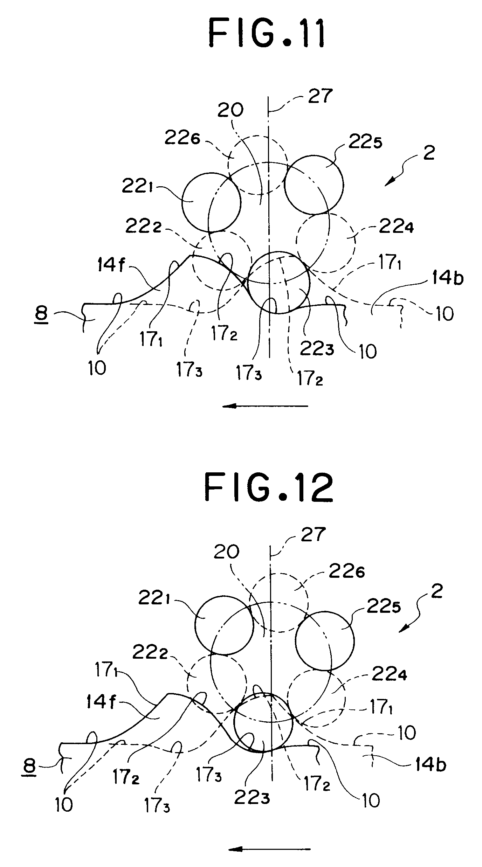

(Phase 8: see Fig.11)

The roller $22_2$ is on the way of ascending the second arcuate region $17_2$ of the plate cam 14b and the roller $22_3$ has finished descending the second arcuate region $17_2$ of the cam 14f. At that time, the roller $22_4$ is about to descend the first arcuate region $17_1$ of the plate cam 14b.

procession・・・0.6, rotation angle・・・0.672, required time・・・0.6

(Phase 9: see Fig.12)

The roller $22_2$ is still on the way of ascending the second arcuate region $17_2$ of the plate cam 14b and the roller $22_3$ is about to ascend the third arcuate region $17_3$ of the cam 14f. At that time, the roller $22_4$ is on the way of descending the first arcuate region $17_1$ of the plate cam 14b.

procession・・・0.7, rotation angle・・・0.822, required time・・・0.7

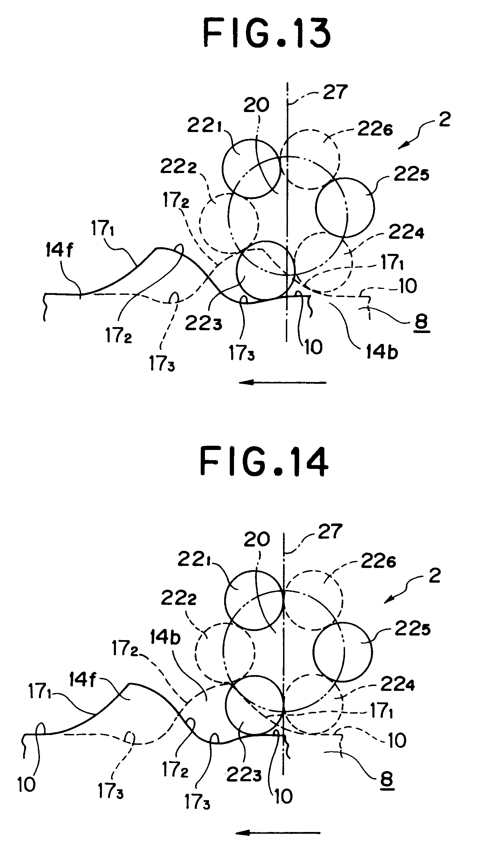

(Phase 10: see Fig.13)

The roller $22_2$ is immediately before finishing ascending the second arcuate region $17_2$ of the plate cam 14b and the roller $22_3$ is on the way of ascending the third arcutate region $17_3$ of the cam 14f. The roller $22_4$, on the other hand, is on the way of descending the first arcuate region $17_1$ of the plate cam 14b.

procession・・・0.8, rotation angle・・・0.932, required time・・・0.8

(Phase 11: see Fig.14)

The roller $22_3$ is immediately before finishing ascending the third arcuate region $17_3$ of the cam 14f and the roller $22_4$ is immediately before finishing descending the first arcuate region $17_1$ of the plate cam 14b.

procession・・・0.9, rotation angle・・・0.989, required time・・・0.9

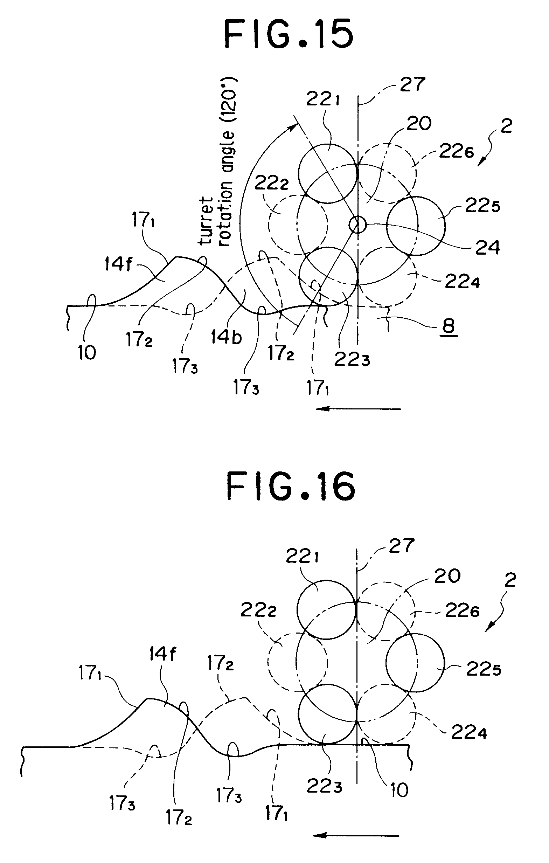

(Phase 12: see Fig.15)

The piston 6 is slightly before finishing expanding. As the slider 8 proceeds from right to left in accordance with a slight expansion provided by the piston 6 before the piston 6 finishes expanding, the rollers $22_3$ and $22_4$ of the turret 2 approach the right flat portion 10 and when the roller $22_1$ contacts the virtual vertical line 27 above the shaft 24, assumed for convenience of explanation, the rotary disk 20 stops rotating.

procession・・・1.0, rotation angle・・・1.0, required time・・・1.0

6

(Phase 13: see Fig.16)

As the slider 8 proceeds from right to left in accordance with an expansion provided by the piston 6 before the piston 6 ends the expansion during a period between the end of phase 12 and the end of phase 13, the roller $22_3$ and $22_4$ of the turret 2 roll on the right flat portion 10, so that the turret 2 departs from the cam portion 12 while the rotary disk 20 being kept in non-rotation and ultimately, the piston 6 finishes expanding. Though not illustrated, before the piston 6 finishes expanding and the procession of the turret 2 is stopped, the piston 6 moving at a velocity collides with the end surface 28a of the cylinder cover 28 and is slightly returned by repulsion due to the collision before it ultimately stops (stoppage has already been described in Description of the Prior Art). Up to this stop condition, the piston moves to cause only rolling of the rollers $22_3$ and $22_4$ on the right flat portion 10. At that time, the rotary disk 20 does not rotate, either, and the turret 2 is caused to dwell.

As described above, under the condition beginning with the start of the phase 1 and ending in the start of the phase 3, the rollers $22_1$ and $22_2$ are carried on the left flat portion 10 and under the condition beginning with the termination of the phase 12 and ending in the termination of the phase 13, the rollers $22_3$ and $22_4$ are carried on the right flat portion, so that the turret 2 is prevented from rotating in both the clockwise and counterclockwise directions and is caused to dwell. Namely, within the upon stoppage of the cylinder 4 the turret 2 is confronted with the flat portion 10 of the slider 8.

Accordingly, even when the cylinder 4 operates to sightly expand under this condition, the turret 2 does not rotate to keep dwelling so long as the rollers $22_1$, $22_2$ and $22_3$, $22_4$ are carried on the left and right flat portions 10, 10.

The rollers $22_5$ and $22_6$ contact neither the flat portion 16 nor the hill-valley shaped region 17 of the slider 8 because the indexing angle is 120°. But in some of other embodiments to be described later, these rollers are brought into contact with the portion 16 and region 17 depending on values of indexing angle used.

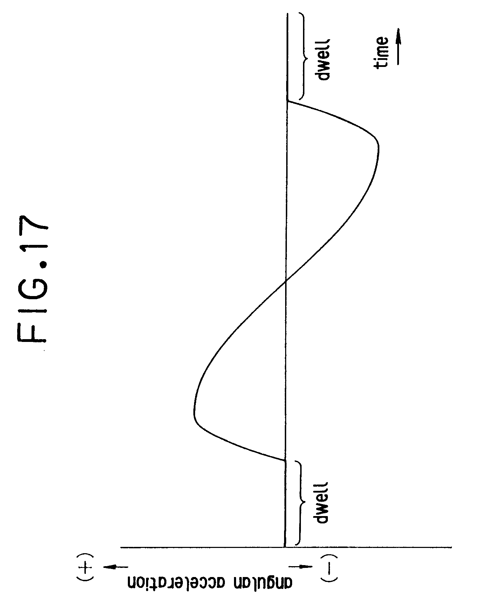

Through the phases 1 to 13 as above, the turret 2 draws or traces a rotational motion curve which is a cam curve as shown in Fig.17 (ordinate represents rotational angular acceleration and abscissa represents time). The cam curve herein does not indicate the shape of a cam but defines a motion curve of a follower member (in this embodiment, the turret 2) driven by the cam (according to this embodiment, the cam portion 12). In Fig.17, sections termed dwell correspond to an interval between the start time point of the phase 1 and the start time point of the phase 3 and an interval between the end time point of the phase 12 and the end time point of the phase 13, respectively, and the other phases correspond to the other interval than the dwell sections in Fig.17. As will be seen from Fig.17, the rotational motion curve of the turret 2 has the dwell sections at the opposite ends, and the cam portion 12 causes the turret 2 to trace a motion curve intevening between the both dwell sections. Therefore, the cam curve of this form will be called a cam curve for two-dwell motion. Since the form of the cam curve for two-dwell motion resembles a sine curve which is modified, this cam curve for two-dwell motion will particularly be referred to as a modified sine curve.

In the cam apparatus 1, the turret 2 is urged to confront the flat portions 10, 10 of the slider 8 within the start region or upon stoppage of the cylinder 4 in a manner to be described below.

(Acceleration region)

The acceleration region of the cylinder 4 in which the turret 2 confronts the flat portion 10 of the slider 8 is specified by a moving distance (l) containing, as factors, a balanced operation velocity (v) of the piston 6 and an acceleration time (t) of the piston 6.

The following equations are used to determine the balanced operation velocity (v), acceleration time (t) and moving distance (l) of the piston 6:

$$v = 1.91(S_2/A_2) \cdot 10^4 \sqrt{273/Te} \qquad (1)$$

$$t = 6.59\sqrt{WL/(A_1 P_1 - R)} \cdot 10^{-2} \qquad (2)$$

$$l = 0.5vt \qquad (3).$$

The above equations are, however, to be used when the piston rod 6b could be about to go out of the cylinder cover 28 following the full expansion of the piston rod and when the piston rod 6b contracts and is about to return to the inside of the cylinder cover 28, the above equations (1) and (2) are reduced to the following equations (1') and (2'):

$$v = 1.91(S_1/A_1) \cdot 10^4 \sqrt{273/Te} \qquad (1')$$

$$t = 6.59\sqrt{WL/(A_2 P_2 - R)} \cdot 10^{-2} \qquad (2').$$

In the above equations, factors are as follows:

$S_1$: intake side resultant effective area (used when the piston rod 6b contracts and is about to return to the inside of the cylinder cover 28) of a velocity control valve in an operation circuit of the cylinder 4

$S_2$: exhaust side resultant effective area (used when the piston rod 6b could go out of the cylinder cover 28 following the full expansion of the piston rod 6b) of the velocity control valve in the operation circuit of the cylinder 4

$A_1$: cross-sectional area on the intake side for the piston 6 of the cylinder 4

$A_2$: cross-sectional area on the exhaust side for the piston 6 of the cylinder 4

Te: absolute temperature

W : weight of a body mounted to the tip of the piston

L : moving stroke of the body mounted to the tip of the piston

$P_1$: internal pressure on the intake side of the cylinder 4

$P_2$: internal pressure on the exhaust side of the cylinder 4

R : load on the cylinder 4.

The above equations will be explained by referring to a specified example.

The moving distance (l) in the acceleration region of the piston 6 will be determined when an operating body (W) of 10kg is moved by a stroke (L) of 20cm, on the assumption that the supplied air pressure is 6kg/cm$^2$, the piston rod 6b fully expand and could go out of the cylinder cover 28, and $S_2$, $A_2$, Te, $A_1$, $P_1$ and R have the following values:

$S_2 = 0.03$cm$^2$
$A_2 = 16.5$cm$^2$
Te $= 293$ °K(room temperature of 20 °C)
$A_1 = 19.6$cm$^2$

$$P_1 = 6kg/cm + 1.033kg/cm$$

$$= 7.033kg/cm$$

R $= 2$kg.

Firstly, the balanced operation velocity (v) is determined from equation (1) as follows:

$$v = 1.91(S_2/A_2) \cdot 10^4 \sqrt{273/Te}$$

$$= 1.91(0.03/16.5) \cdot 10^4 \sqrt{273/293}$$

$$= 33.5cm/sec.$$

Next, the acceleration time (t) of the piston 6 is determined from equation (2) as follows:

$$t = 6.59\sqrt{WL/(A_1 P_1 - R)} \cdot 10^{-2}$$

$$= 6.59\sqrt{(10 \times 20)/(19.6 \times 7.033 - 2)} \cdot 10^{-2}$$

$$= 0.08sec.$$

Accordingly, the moving distance (l) of the piston 6 can be determined from equation (3) as follows:

$$l = 0.5vt$$

$$= 0.5 \times 33.5 \times 0.08$$

$$= 1.34 cm.$$

Then, acceleration (a) as defined by

$$a = v/t \quad (4)$$

is determined as follows:

$$a = (33.5/0.08)/980$$

$$= 0.43g.$$

From the above, the piston 6 reaches a balanced operation velocity of 33.5cm/sec when the piston 6 moves by a distance of 1.34cm at an acceleration of 0.43g. Accordingly, a flat portion 10 having a length of at least 1.34cm must be provided in correspondence to the acceleration region. When it comes to making the turret 2 confront the flat portion 10 of the slider 8 upon stoppage, the turret 2 can be set in anticipation of a slight amount by which the piston 6 returns when the piston 6 is repulsed by the cylinder case 28 after the piston 6 moving at the balanced operation velocity has collided with the cylinder case 28. However, since this slight amount is normally of the order of one-several tenths of the moving distance (1) owned by the piston 6, no problem will be encountered if both the flat portions 10, 10 of the slider 8 are set to a value exceeding the range defined by equation (3).

(Uniform acceleration region)

Moving distance (L) of a body in uniform acceleration motion or uniform velocity motion is determined by

$$L = 0.5vt_1 + vt_2 \quad (5)$$

where $t_1$ represents a time for which the uniform acceleration motion proceeds and $t_2$ a time for which the uniform velocity motion proceeds. By solving equation (5) for $t_2$, there results

$$t_2 = (L/v) - 0.5t_1 \quad (6).$$

The $t_1$ referred to here corresponds to t ($= 0.08$sec) which has already been determined pursuant to equation (2).

In equation (6), the v corresopnds to the aforementioned balanced operation velocity which has a value of $v = 33.5$cm/sec determined pursuant to equation (1) for providing a stroke of 20cm and by sustituting these numerical values into equation (6),

$$t_2 = (20/33.5) - 0.5 \times 0.08$$

$$= 0.56 sec$$

can be obtained.

In addition, by subtracting from 20cm the 1.34cm distance by which the piston 6 moves at the 0.43g acceleration within the acceleration region, a distance of 18.66cm can be known by which the piston 6 moves within the uniform velocity region.

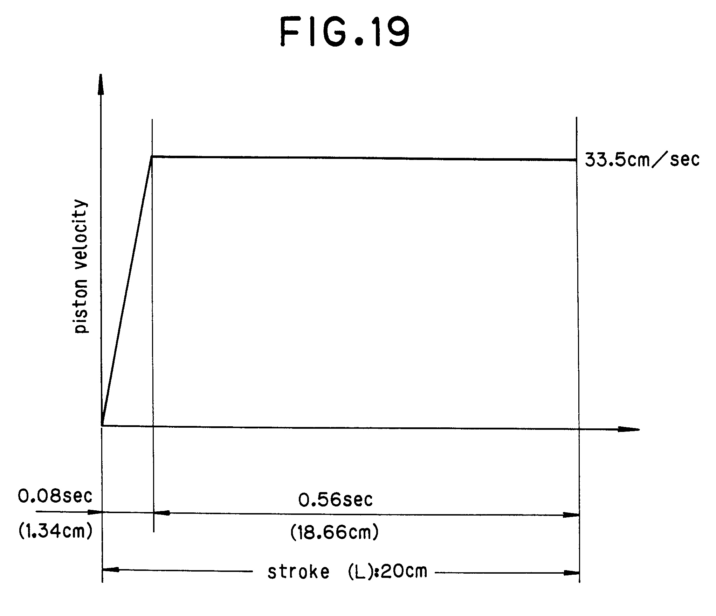

From the above, according to this specified example, the piston 6 exhibits motion characteristics as shown in Fig.19.

Thus, according to the cam apparatus of the embodiment 1, the two rollers $22_1$, $22_2$ or $22_3$, $22_4$ of the rollers $22_1$, $22_2$, • • • • •prevent the turret 2 from rotating when the two rollers are carried on the flat portion 10 at either one of the opposite ends of the slider 8 and cause the turret 2 to confront the flat portion 10 within the start region (acceleration region) or upon stoppage of the cylinder 4. Consequnetly, even when the turret 2 receives, from the cylinder 4, shocks generated by the cylinder 4 within the start region or upon stoppage, rotation of the turret 2 is never affected by the shocks because the turret 2 dose not rotate inherently at the flat portion 10. Accordingly, the turret 2 standing for the follower member can be rotated constantly stably, making complicated control unneeded.

The start region of the cylinder 4 in which the turret 2 confronts the flat portion 10 of the slider 8 is specified by moving distance (l) of the piston 6 and can easily be set, along with balanced operation velocity (v) and acceleration time (t) of the piston 6 which are factors of the moving distance (l), by the following equations:

$$v = 1.91(S_2/A_2) \bullet 10^4 \sqrt{273/Te}$$
$$t = 6.59\sqrt{WL/(A_1 P_1 - R)} \bullet 10^{-2}$$
$$1 = 0.5vt.$$

Accordingly, the length of flat portion 10, which does not affect the rotation of the turret 2 standing for the follower member even when the piston 6 of the cylinder 4 standing for the motivator member moves within the start region or upon stoppage, can easily be indexed. The above example has been described by referring to the case where the piston rod 6b expands and could go out of the cylinder cover 28 but in the case where the piston rod 6b contracts and is about to return to the inside of the cylinder cover, the previously-described equations (1') and (2') are applied and similar operation and effects can obviously be attained.

The contour of the cam portion 12 of the previously-described cam apparatus 1 can be calculated through a method to be described hereunder.

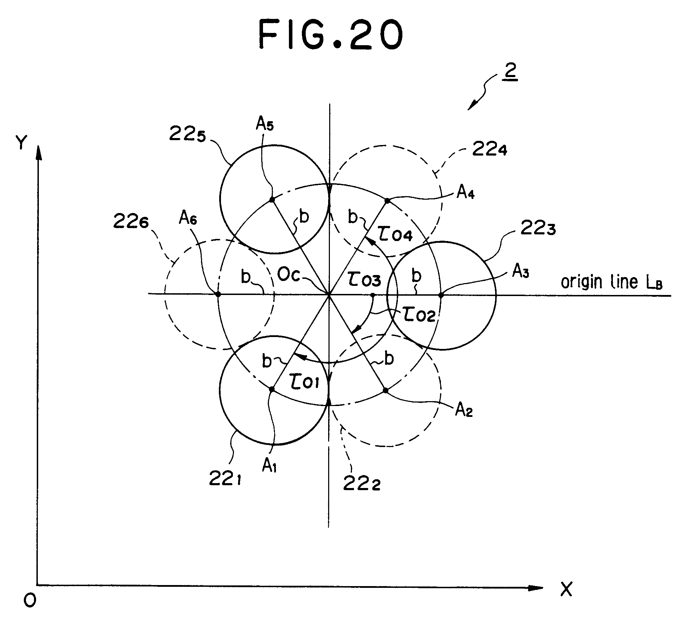

Firstly, as shown in Fig.20, only the turret 20 is located at a desired site of a virtual XY coordinate system having an XY plane parallel to a plane in which the turret 2 rotates and this desired site is defined as the initial position of the turret 2. A virtual line inclusive of center Oc of the turret 2 and parallel to X axis is defined as an origin line $L_B$.

The origin line $L_B$ is used as a reference for indicating what angles lines connecting positions of the individual rollers $22_1$, $22_2$, • • • • •,$22_6$, that is, center positions $A_1$, $A_2$,• • • • •,$A_6$ of the individual rollers $22_1$, $22_2$,• • • • •,$22_6$ with the center Oc of the turret 2 (these connecting lines are called follower radii b for convenience of explanation) make to the origin line $L_B$. A counterclockwise angle making to the reference of origin line $L_B$ will be referred to as a "positive angle" and a clockwise angle making to the reference of origin line $L_B$ will be referred to as a "negative angle". Accordingly, in the present embodiment, when the turrent 2 is placed at the initial position, the rollers $22_1$ and $22_2$ are positioned to make negative angles, the rollers $22_3$ and $22_6$ are positioned on the origin line $L_B$ and the rollers $22_4$ and $22_5$ are positioned to make positive angles.

Then, angles $\tau_{p1}$, $\tau_{p2}$,• • • • •, $\tau_{p6}$ which the individual follower radii b of the rollers $22_1$, $22_2$,• • • • •,$22_6$ make to the origin line $L_B$ are expressed by equation (7):

$$\tau_p = \tau_0 - \tau_h S \quad (7)$$

where $\tau_0 = \tau_h(Gn-3)/Gm$, $\tau_h = 2\pi/n$, Gn = 1, 2,• • • • •,Gm + 2, and Gm = Nr/n.

The above factors are as follows:

$\tau_0$: general term of angles between the individual follower radii b and the origin line $L_B$ when the turret 2 is placed at the initial position. Since the angles are different for the individual rollers, the general term $\tau_0$ is specified as $\tau_{01}$, $\tau_{02}$,• • • • •, $\tau_{06}$ for the rollers $22_1$, $22_2$,• • • • •,$22_6$ (in Fig.20, angles $\tau_{01}$ to $\tau_{04}$ which are brought into association with the slider 8 as will be described later are indicated).

$\tau_h$: indexing angle of the turret 8 (120° in this embodiment)

S : cam curve removed of dimension (a function of non-dimensional time T which is given by S = S(T) where T and S are $0 \leq T \leq 1$ and $0 \leq S \leq 1$. Accordingly, S = 0 holds for T = 0 and S = 1 holds for T = 1)

n : the division number (number indicated by 360°/$\tau_h$.In this embodiment, $\tau_h$ is 120° and so the division number is 3.)

Nr : the roller total number (the number of rollers mounted to the turret. In this embodiment, three for each of the front and back surfaces 20a and 20b of the rotaty disk 20 and six in total.)

Gm : roller multiple (number indicated by Nr/n. In this embodiment, 2 because Nr is 6 and n is 3.)

Gn : numbers assigned to the rollers $22_1$ to $22_4$, among the rollers $22_1$, $22_2$,••••$22_6$, which interfere with the slider 8 (in this embodiment, the six rollers are designated by reference numerals $22_1$, $22_2$,••••,$22_6$ and Gn numbers signify minor numbers 1 to 4 suffixed to reference numeral 22.)

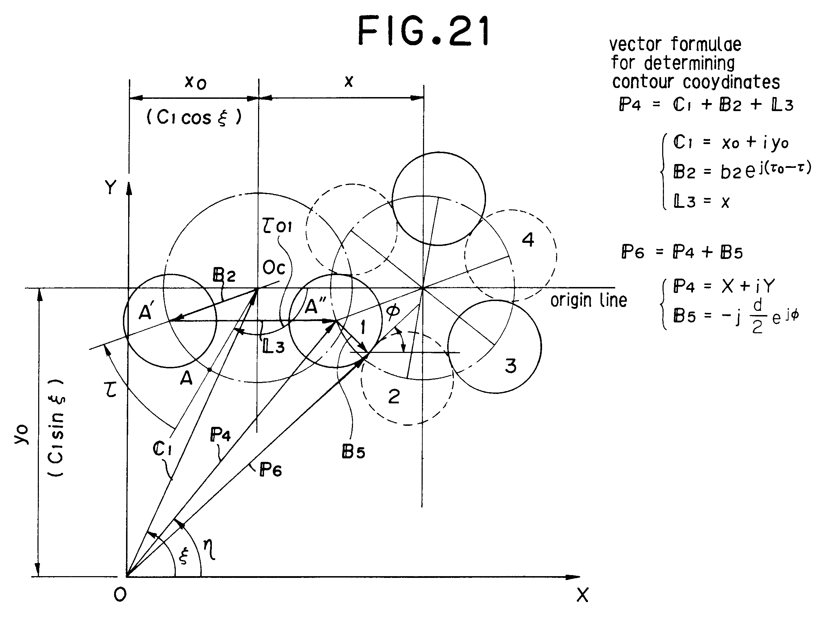

Next, a vector diagram for determining the roller center will be described by way of example of the roller $22_1$ with reference to Fig.21.

Since the turret 2 lies on the XY coordinates, a virtual displaced position corresponding to an actual displacement of roller center $A_1$ caused when the turret 2 is displaced by a travel or procession of the slider 8 can be considered as a position $A_1'$ resulting from rotating the initial position $A_1$ by $\tau$ on the XY coordinates.

Actually, however, the turret 2 is mounted to the cam apparatus 1 so as to be rotatable relative to only the housing, not shown, as described previously and the turrent 2 is rotated by rectilinear reciprocation of the slider 8 and therefore, an actual procession x of the slider 8 not laid on the XY coordinates must be taken into consideration. This x can be expressed by equation (8):

$$x = x_h T \qquad (8)$$

where the travel or procession direction of the slider 8 (the expansion direction of the slider 8) is in -X direction and individual factors are as follows:

$x_h$ : cam allotting length

T : non-dimensional time (devoid of unit), ($T = t/t_h$)

t : time actually required for the slider 8 to move by precission x 〈second〉

$t_h$ : time actually required for the slider 8 to move over the cam indexing length x 〈second〉

It is also assumed that the center coordinates of the rollers 22 relative to the coordinate origin are ($x_0$, $y_0$) at non-dimensional time T = 0.

The turret 2 is displaced by the rectilinear motion of the slider 8 as described above and to meet practicality, a description must be given which presupposes that the turret 2 is allowed to be rotated but is not permitted to make rectilinear motion in the procession direction of the slider 8. Therefore, it is necessary to consider that in response to displacement of the roller center from $A_1$ to $A_1'$, the turret 2 is moved straightforwardly to the right, as viewed in Fig. 21, by a distance x corresponding to the procession of the slider 8. Namely, the roller center $A_1$ once displaced to $A_1'$ is translated to $A_1''$. By repeating this operation within the range between T = 0 and T = 1, a locus of the roller center beginning with T = 0 can be determined.

In case where the origin of XY coordinate is O and a vector is symbolized by

$$" \overset{\bullet}{[\ ]} ",$$

a vector indicative of the $A_1''$ point, i.e., $\rightarrow [OA_1'']$ is expressed by equation (9):

$$\rightarrow [P_4] = \rightarrow [C_1] + \rightarrow [B_2] + \rightarrow [L_3] \qquad (9).$$

Factors in equation (9) are as follows:

$\rightarrow [C_1]$: a known vector indicative of the center position of the turret 2 and expressed by equation (10),

$$\rightarrow [C_1] = c_1 e^{j\zeta} = c_1 (\cos\zeta + j\sin\zeta) \qquad (10)$$

$\rightarrow [L_3]$: a moving amount in X direction of the slider 8 as expressed by equation (11),

$$\rightarrow [L_3] = x \text{ (a vector having a magnitude of x in real axis direction)} \qquad (11)$$

$\rightarrow [B_2]$: a vector resulting from rotating vector $B_{20}(= \rightarrow [OcA] = b_2 e^{jr0})$ indicative of the roller center $A_1$ at T = 0 clockwise by $\tau$ and expressed by equation (12).

$$\rightarrow [B_2] = \rightarrow [B_{20}]e^{-j\tau}$$

$$= b_2 e^{-j\tau 0}e^{-j\tau}$$

$$= b_2 e^{j(\tau 0 - \tau)}$$

$$= b_2\{\cos(\tau_0 - \tau) + j\sin(\tau_0 - \tau)\} \qquad \cdots(12).$$

And an index "$\tau 0$" of abovementioned numeral formula $b_2 e^{j\tau 0}$ means actually an index "$\tau_0$". Similarly aftermentioned indication of relating to index $\tau$ is treated the same.

By substituting equations (10), (11) and (12) into equation (9), there results equation (13):

$$\rightarrow [P_4] = \rightarrow [C_1] + \rightarrow [B_2] + \rightarrow [L_3]$$

$$= c_1 e^{j\xi} + b_2 e^{j(\tau 0 - \tau)} + x \qquad \cdots(13).$$

On the other hand, by using

$$\tau = \tau_h S \qquad (14)$$

$$x = x_h T \qquad (8)$$

$$\tau_0 = \tau_h(Gn\text{-}3)/Gm, \text{ (where } Gn = 1, 2, \cdots Gm + 2) \qquad \text{(from equation (7))},$$

equation (13) is reduced to equation (15):

$$\rightarrow [P_4] = c_1 e^{j\xi} + b_2 e^{j\{(Gn-3)\tau h/Gm - \tau hS\}} + x_h T \qquad (15).$$

Then, the roller center locus can be expressed in terms of the XY coordinates by equations (16) and (17) as follows:

$$X = c_1 \cos\zeta + b_2 \cos\{(Gn\text{-}3)\tau_h/Gm\text{-}\tau_h S\} + x_h T \qquad (16)$$

$$Y = c_1 \sin\zeta + b_2 \sin\{(Gn\text{-}3)\tau h/Gm\text{-}\tau_h S\} \qquad (17).$$

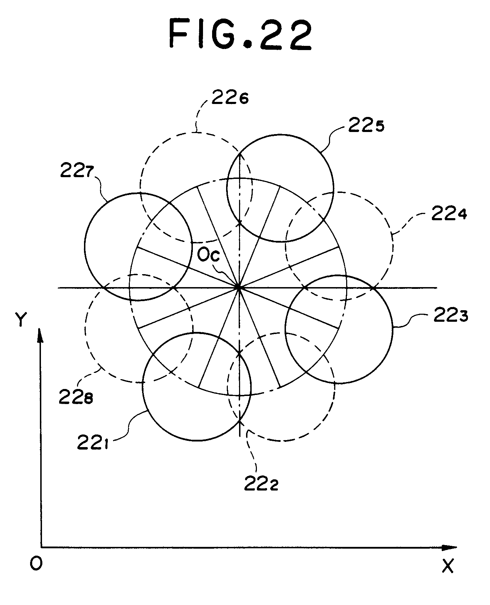

When the number of rollers is 8, rollers are arranged as shown in Fig. 22 and equation (7) is reduced to equation (18):

$$\tau_0 = \tau_h(Gn\text{-}3.5)/Gm, \text{ (where } Gn = 1, 2, \cdots Gm + 2) \qquad (18).$$

In this case, the calculation process is identical to that in the case of the number of rollers being 6 with the only exception that an angle $\tau_0$ which the center of each roller makes to the origin line $L_B$ when the turret 2 is placed at the initial position is replaced with the above equation (18) and will not be described herein.

Next, formula for calcultaion of the roller center locus of each roller in the case of the number of rollers being 6 ($Nr = 6$, $Gm = 2$, $n = 3$) as shown in Fig.21 will be described.

Here, by introducing the second suffix indicative of roller numbers into vectors in equation (13) (but $\rightarrow$ - $[C_1]$ is common to all rollers), equation (13) is reduced to equation (19):

$$\rightarrow [P_{41}] = \rightarrow [C_1] + \rightarrow [B_{21}] + \rightarrow [L_{31}]$$

$$= c_1 e^{j\xi} + b_2 e^{j(\tau 01 - \tau)} + x \qquad \cdots(19)$$

For the first roller, $Gm = 2$, $Gn = 1$ and $\tau_h = 2\pi/3$ are given in connection with equation (7) and $\tau_{01}$ is expressed by equation (20):

$$\tau_{01} = \tau_h(Gn-3)/Gm$$
$$= \{(2\pi/3)/2\}(1-3)$$
$$= -2/3\pi \qquad\qquad \cdots(20).$$

From equation (14), $\tau$ is given by equation (21):

$$\tau = -(2/3\pi)-(2/3\pi)S \qquad (21).$$

Accordingly, equation (19) is reduced to equation (22):

$$\rightarrow [P_{41}] = P_4 e^{j\eta}$$
$$= c_1 e^{j\xi} + b_2 e^{j\{(-2/3)\pi-(2/3)\pi S\}} + x_h T \qquad\qquad \cdots(22).$$

$\rightarrow [P_{41}]$ is expressed in terms of the (X, Y) coordinates by equations (23) and (24), indicating the center locus of the first roller:

$$X_1 = P_4 \cos\eta$$
$$= c_1\cos\xi + b_2\cos\{-(2/3)\pi-(2/3)\pi S\} + x_h T \qquad\qquad \cdots(23)$$
$$Y_1 = P_4 \sin\eta$$
$$= c_1\sin\xi + b_2\sin\{-(2/3)\pi-(2/3)\pi S\} \qquad\qquad \cdots(24).$$

Similarly, the center loci of the second, third and fourth rollers are given as follows:

[Center locus of the second roller]

$$\rightarrow [P_{42}] = \rightarrow [C_1] + \rightarrow [B_{22}] + \rightarrow [L_{32}]$$
$$= c_1 e^{j\xi} + b_2 e^{j(\tau_{02}-\tau)} + x \qquad\qquad \cdots(25)$$
$$\tau_{02} = \tau_h(Gn-3)/Gm$$
$$= \{(2\pi/3)/2\}(2-3)$$
$$= -\pi/3 \qquad\qquad \cdots(26)$$

$$X_2 = c_1\cos\xi + b_2\cos\{-(1/3)\pi - (2/3)\pi S\} + x_h T \qquad (27)$$

$$Y_2 = c_1\sin\xi + b_2\sin\{-(1/3)\pi - (2/3)\pi S\} \qquad (28).$$

[Center locus of the third roller]

$$\rightarrow [P_{43}] = \rightarrow [C_1] + \rightarrow [B_{23}] + \rightarrow [L_{33}]$$
$$= c_1 e^{j\xi} + b_2 e^{j(\tau 03-\tau)} + x \qquad \cdots(29)$$

$$\tau_{03} = \tau_h (Gn-3)/Gm$$
$$= \{(2\pi/3)/2\}(3-3)$$
$$= 0 \qquad \cdots(30)$$

$$X_3 = c_1 \cos\xi + b_2 \cos\{-(2/3)\pi S\} + x_h T \qquad (31)$$

$$Y_3 = c_1 \sin\xi + b_2 \sin\{-(2/3)\pi S\} \qquad (32)$$

[Center locus of the fourth roller]

$$\rightarrow [P_{44}] = \rightarrow [C_1] + \rightarrow [B_{24}] + \rightarrow [L_{34}]$$
$$= c_1 e^{j\xi} + b_2 e^{j(\tau 04-\tau)} + x \qquad \cdots(33)$$

$$\tau_{04} = \tau_h (Gn-3)/Gm$$
$$= \{(2\pi/3)/2\}(4-3)$$
$$= \pi/3 \qquad \cdots(34)$$

$$X_4 = c_1 \cos\xi + b_2 \cos\{\pi/3 - (2/3)\pi S\} + x_h T \qquad (35)$$

$$Y_4 = c_1 \sin\xi + b_2 \sin\{\pi/3 - (2/3)\pi S\} \qquad (36).$$

As described above, the center loci of the individual rollers within the range between T = 0 and T = 1 can be determined from equations (23), (24), (27), (28), (31), (32), (35) and (36).

In the case where the roller arrangement number (Nr) is 6 and the division number (N) is 3, the first to fourth rollers contact the cam to participate in rotating the turret but the fifth and sixth rollers do not contact the cam not to participate in rotating the turret, with the result that the center loci of the latter rollers have no influence on the cam shape.

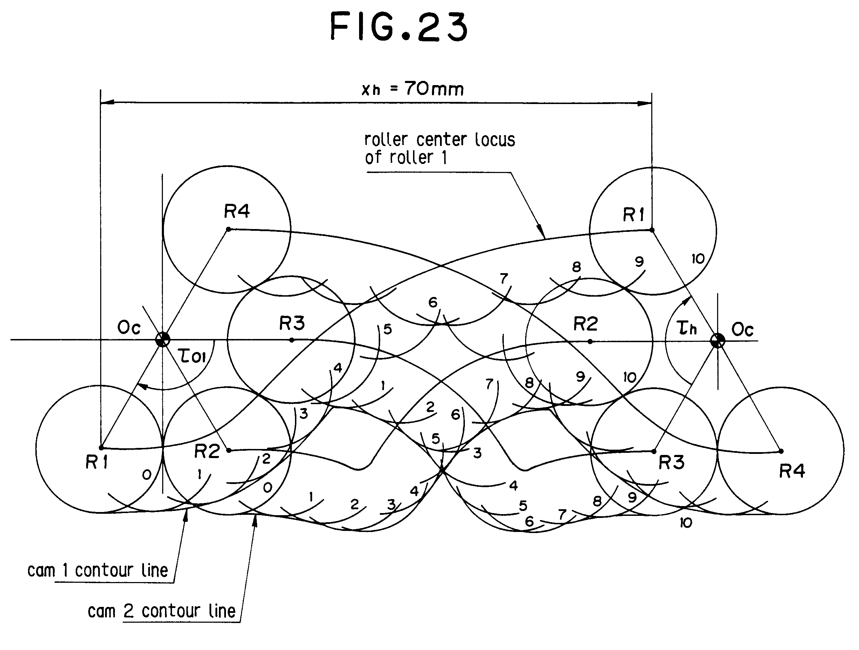

Next, an example of determining the cam contour from the center loci of the individual rollers will be described with reference to Fig.23.

In Fig.23, the center loci of the individual rollers determined from equations (23), (24), (27), (28), (31), (32), (35) and (36) are first drawn. Subsequently, circles having their centers on the individual roller center loci and each having a radius equal to a radius of d/2 of the individual rollers $22_1$, $22_2$, $\bullet\bullet\bullet\bullet$, $22_3$ are drawn, where d represents a roller diameter. Continuous curves circumscribing these circles define contour lines of the cam which move each follower member in accordance with a displacement amount given by the displacement formula of cam $\tau = \tau_h S(T)$ where $\tau$ represents displacement, $\tau_h$ indexing angle and S(T) non-dimensional displacement (cam curve). In the example of Fig.23, the cam curve is a modified sine curve.

As shown in the example of Fig.23, in the turret 2 having a roller multiple Gm which is indicated by Gm = Nr/n = 2, four rollers are moved simultaneously and hence four types of roller center loci and four types of cam contour are formed.

Then, each of the four cam contour lines has a rightward rise shape portion and a rightward fall shape portion which are in charge of the following roles and are cooperative to fulfil the role of a conjugate cam.

The rightward rise shape portion corresponds to a cam contour portion which is adapted to push the roller in the travel or procession direction of cam so as to rotate the follower member and will be called a rise stroke.

The rightward fall shape portion corresponds to a cam contour portion which is adapted to push the roller in a direction opposite to the cam procession direction so as to prevent the follower member from making a rotation which is in excess of a predetermined displacement and will be called a fall stroke.

The following Table 1 shows which of the rise stroke (represented by R) and fall stroke (represented by F) the cam contour lines in contact with the rollers as shown in Fig. 23 assume at respective non-dimensional times set up by dividing into 10 the interval between $T = 0$ and $T = 1$.

Table 1

|  | 0 | 1 | 2 | 3 | 4 | 5 | 6 | 7 | 8 | 9 | 10 |
|---|---|---|---|---|---|---|---|---|---|---|---|
| Contour line 1 by roller 1 | R | R | R | R | R | R | R | R | R | R | R |
| Contour line 2 by roller 2 | F | F | F | F | R | R | R | R | R | R | R |
| Contour line 3 by roller 3 | F | F | F | F | F | F | F | R | R | R | R |
| Contour line 4 by roller 4 | F | F | F | F | F | F | F | F | F | F | F |

As is clear from Table 1, the individual rollers contacts the four contour lines simultaneously and at any time points, the rise stroke and the fall stroke are in combination. In other words, the turret 2 is moved while its rotation being constrained.

Incidentally, all of the four contour lines are not always necessary to rotate the turret 2 of the present example by $\tau_h ( = 2\pi/3)$.

By studying the contour lines formed by loci of the rollers $22_1$ and $22_2$ in connection with Fig.23 and Table 1, it will be understood that contour lines of the roller $22_2$ formed at the fourth and ensuing time points change from the fall stroke till then to the rise stroke. Contour lines formed by the roller $22_1$ which assumes the rise stroke at that time take a transit portion for hand-over at the fourth time point, but at the fifth and ensuing time points, contour lines of the roller $22_1$ can be dispensed with by being transferred to the contour line formed by the roller $22_2$.

Further, by studying the contour lines formed by the loci of the rollers $22_2$ and $22_3$, it will be understood that contour lines of the roller $22_3$ formed at the seventh and ensuing time points change from the fall stroke till then to the rise stroke. Contour lines formed by the roller $22_2$ which assumes the rise stroke at that time take a transit portion for hand-over at the eighth time point, but at the ninth and ensuing time points, contour lines of the roller $22_2$ can be dispensed with by being transferred to the contour line formed by the roller $22_3$.

Similar transfer is also valid for the fall stroke and contour lines of the roller $22_3$ formed at the first and preceding time points and counter lines of the roller $22_4$ formed at the fifth and preceding time points can be dispensed with.

From the above, the necessary contour lines of the cam portion 12 have two profiles as below.

More particularly, the contour line of the hill-valley shaped region 17 of the plate cam 14f has a profile formed by the contour lines 1 to 3 which underlie an intersection of the contour line 1 formed by the roller $22_1$ with the contour line 3 formed by the roller $22_3$.

The contour line of the hill-valley shaped region 17 of the plate cam 14b has a profile formed by the contour lines 2 to 4 which underlie an intersection of the contour line 2 formed by the roller $22_2$ with the contour line 4 formed by the roller $22_4$.

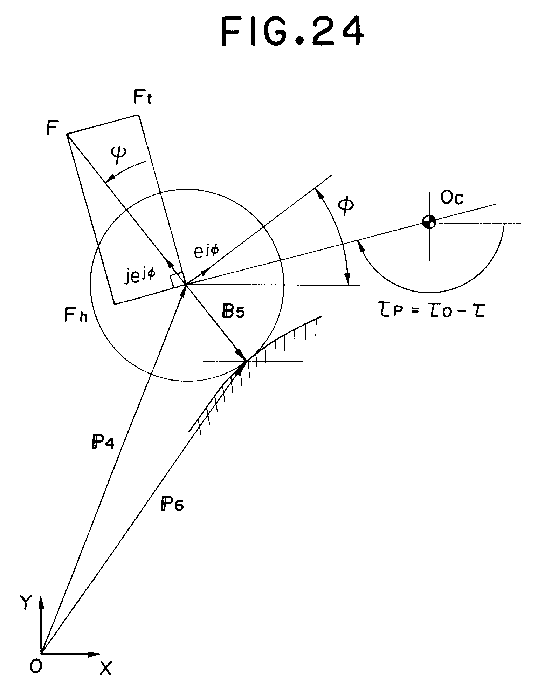

Putting the method for determining the cam contour from the roller center loci as described above aside, the cam contour can be determined directly from a locus of the tip of a vector $\rightarrow$ [P6], as shown in Fig.24.

Referring to Fig.24, when equation (9) is differentiated by T, there results equation (37):

$$\frac{d}{dT}[\rightarrow[P_4]] = \frac{d}{dT}[\rightarrow[B_2]] + \frac{d}{dT}[\rightarrow[L_3]]$$

$$= \frac{d}{dT}[b_2 e^{j\tau 0} e^{-j\tau}] + \frac{d}{dT}[x_h T]$$

$$= -jb_2 e^{j\tau 0} e^{-j\tau} \frac{d\tau}{dT} + x_h$$

$$= -jb_2 e^{j(\tau 0 - j\tau)} \frac{d\tau}{dT} + x_h$$

$$= b_2 \frac{d\tau}{dT} \sin(\tau_0 - \tau) + x_h - jb_2 \frac{d\tau}{dT} \cos(\tau_0 - \tau)$$

$$\cdots (37)$$

where $d\tau/dT = d(\tau_h S)/dT = \tau_h V$ stands and V represents non-dimensional velocity of cam curve.

Gradient angle $\phi$ of the roller center locus corresponds to an angle which a differential of $\rightarrow [P_4]$ by T makes to the real axis direction and is expressed by equation (38) by using a real part and an imaginary part of equation (37):

$$\tan \phi = -\frac{b_2[d\tau/dT]\cos(\tau_0 - \tau)}{b_2[d\tau/dT]\sin(\tau_0 - \tau) + x_h} \qquad \cdots (38)$$

and for the arrangement in which six rollers are spaced apart from each other at equal angular intervals, factors in equation (38) are given by,

$$\tau_0 = \frac{\tau_h}{Gm}(Gn-3), \qquad Gn = 1, 2, \cdots, Gm+1 \qquad \cdots (39)$$

and for the arrangement in which eight rollers are spaced apart from each other at equal angular intervals, factors in equation (38) are given by,

$$\tau_0 = \frac{\tau_h}{Gm}(Gn-3.5), \qquad Gn = 1, 2, \cdots, Gm+1 \qquad \cdots (40)$$

Returning to Fig.24, since the vector $\rightarrow [P_6]$ indicative of the cam contour is expressed by the sum of a vector $\rightarrow [P_4]$ indicative of the roller center and a vector $\rightarrow [B_5]$ indicative of a radius of the roller in contact with the cam, the following equation (41) stands:

$$\rightarrow [P_6] = \rightarrow [P_4] + \rightarrow [B_5] \qquad (41)$$

where → [P₄] has already been known from equations (15) to (17) and → [B₅], which is a vector having a length equal to the roller radius (= d/2) and directed to a direction resulting from rotating the gradient angle $\phi$ of the roller center locus clockwise by $\pi/2$, can be expressed by the following equation (42):

$$\rightarrow [B_5] = \frac{d}{2} e^{j\phi} e^{-j\pi/2}$$

$$= -j \frac{d}{2} e^{j\phi}$$

$$= \frac{d}{2} \sin \phi - j \frac{d}{2} \cos \phi \qquad \cdots (42).$$

From the above relation, coordinates → [P₆] = (X', Y') of the cam contour can be expressed by equations (43) and (44):

$$X' = X + (d/2)\sin \phi$$

$$= x_0 + b_2 \cos(\tau_0 - \tau) + x + (d/2)\sin \phi \qquad \cdots (43)$$

$$Y' = Y - (d/2)\cos$$

$$= y_0 + b_2 \sin(\tau_0 - \tau) - (d/2)\cos \phi \qquad \cdots (44).$$

(Embodiment 2)

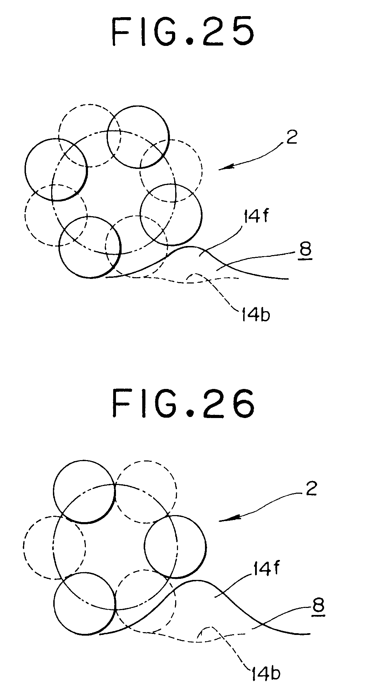

As will be seen from Fig.25, embodiment 2 is directed to the case where the indexing angle of the turret 2 is 45°, the hill-valley region 17 is shaped to a form for permitting the the turret 2 to draw a rotational motion curve which is a modified sine curve, and the number of rollers 22 is eight.

(Embodiment 3)

As will be seen from Fig.26, embodiment 3 is directed to the case where the indexing angle of the turret 2 is 60°, the hill-valley shaped region 17 has a form for permitting the turret 2 to draw a rotational motion curve which is a modified sine curve, and the number of rollers 22 is six.

(Embodiment 4)

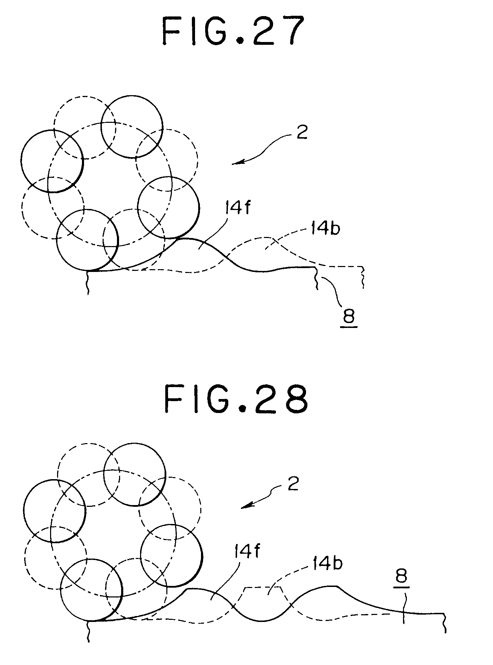

As will be seen from Fig.27, embodiment 4 is directed to the case where the indexing angle of the turret 2 is 90°, the hill-valley shaped region 17 has a form for permitting the turret 2 to draw a rotational motion curve which is a modified sine curve, and the number of rollers 22 is eight.

(Embodiment 5)

As will be seen from Fig.28, embodiment 5 is directed to the case where the indexing angle of the turret 2 is 135°, the hill-valley shaped region 17 has a form for permitting the turret 2 to draw a rotational motion curve which is a modified sine curve, and the number of rollers 22 is eight.

(Embodiment 6)

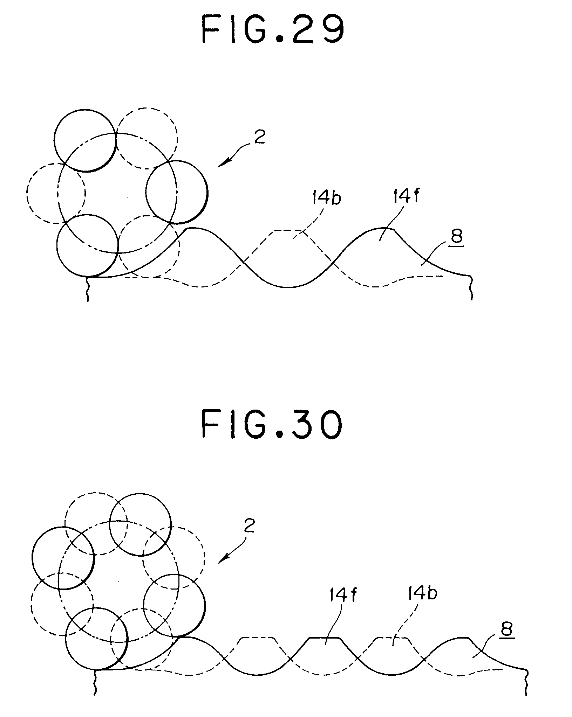

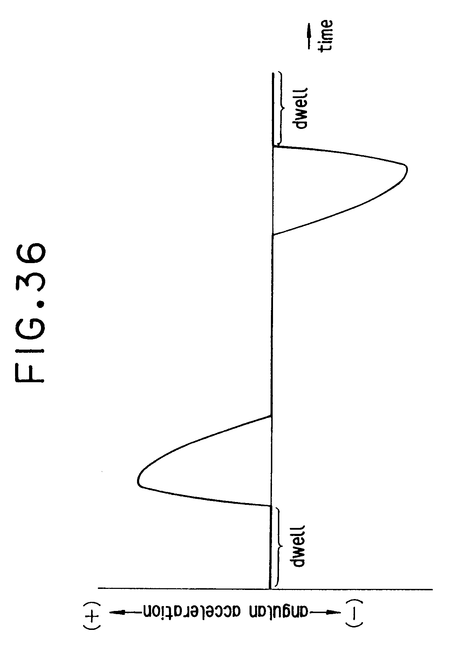

As will be seen from Fig.29, embodiment 6 is directed to the case where the indexing angle of the turret 2 is 180°, the hill-valley shaped region 17 has a form for permitting the turret 2 to draw a rotational motion curve which is a modified uniform velocity curve, and the number of rollers 22 is eight. The modified uniform velocity curve referred to herein is a cam curve for two-dwell motion having a form as shown in Fig.36.

(Embodiment 7)

As will be seen from Fig.30, embodiment 7 is directed to the case where the indexing angle of the turret 2 is 225°, the hill-valley shaped region 17 has a form for permitting the turret 2 to draw a rotational motion curve which is a modified uniform velocity curve, and the number of rollers 22 is eight.

(Embodiment 8)

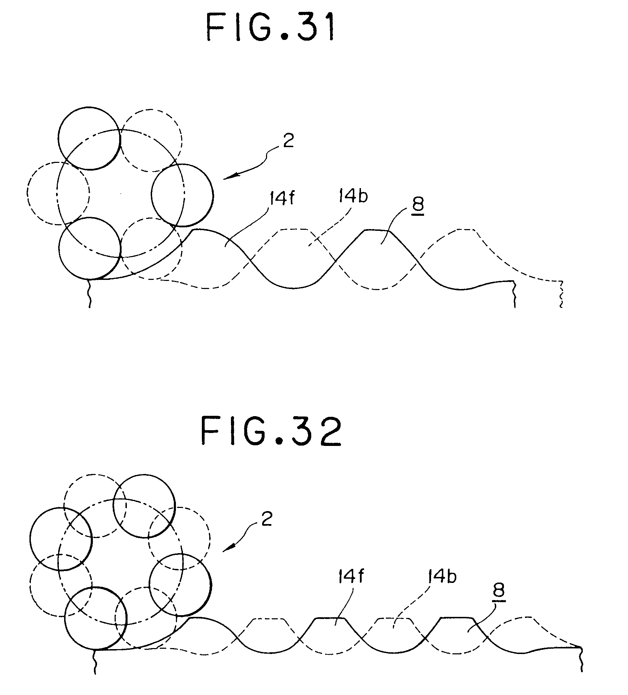

As will be seen from Fig.31, embodiment 8 is directed to the case where the indexing angle of the turret 2 is 240°, the hill-valley shaped region 17 has a form for permitting the turret 2 to draw a rotational motion curve which is a modified uniform velocity curve, and the number of rollers 22 is six.

(Embodiment 9)

As will be seen from Fig.32, embodiment 9 is directed to the case where the indexing angle of the turret 2 is 270°, the hill-valley shaped region 17 has a form for permitting the turret 2 to draw a rotational motion curve which is a modified uniform velocity curve, and the number of rollers 22 is eight.

(Embodiment 10)

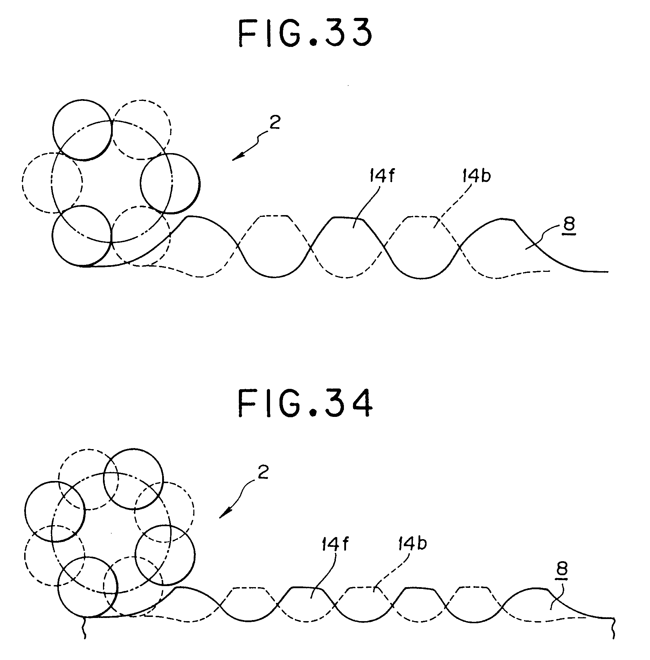

As will be seen from Fig.33, embodiment 10 is directed to the case where the indexing angle of the turret 2 is 300°, the hill-valley shaped region 17 has a form for permitting the turret 2 to draw a rotational motion curve which is a modified uniform velocity curve, and the number of rollers 22 is six.

(Embodiment 11)

As will be seen from Fig.34, embodiment 11 is directed to the case where the indexing angle of the turret 2 is 315°, the hill-valley shaped region 17 has a form for permitting the turret 2 to draw a rotational motion curve which is a modified uniform velocity curve, and the number of rollers 22 is eight.

(Embodiment 12)

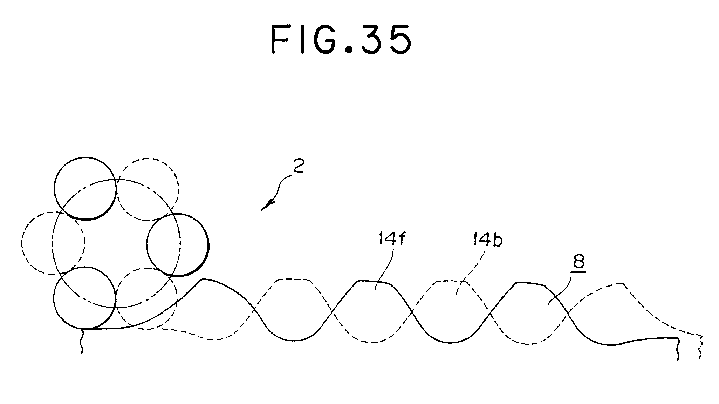

As will be seen from Fig.35, embodiment 12 is directed to the case where the indexing angle of the turret 2 is 360°, the hill-valley shaped region 17 has a form for permitting the turret 2 to draw a rotational motion curve which is a modified uniform velocity curve, and the number of rollers 22 is six.

The foregoing embodiments 1, 3, 6, 8, 10 and 12 can be described such that the indexing angle $\tau_h$ of turret 2 conforming to rectilinear motion of slider 8 due to expansion motion of the piston 6 is

$60° \leq \tau_h \leq 360°$ (where $\tau_h = 60n$, n:natural number),

the hill-valley of the cam portion 12 of the slider 8 is shaped to have a form for permitting the turret 2 to draw a rotational motion curve which is a modified sine curve or a modified uniform velocity curve when $\tau_h \leq 135°$ and $\tau_h \geq 180°$ stand, and the number of rollers 22 of the turret 2 is six.

The foregoing embodiments 2, 4, 5, 7, 9 and 11 can be described such that the indexing angle $\tau_h$ of turret 2 conforming to rectilinear motion of slider 8 due to expansion motion of the piston 6 is

$45° \leq \tau_h \leq 315°$ (where $\tau_h = 45n$, n:natural number),

the hill-valley of the cam portion 12 of the slider 8 is shaped to have a form for permitting the turret 2 to draw a rotational motion curve which is a moidified sine curve or a modified uniform velocity curve when $\tau_h \leq 135°$ and $\tau_h \geq 180°$ stand, and the number of rollers 22 of the turret 2 is eight.

The enbodiments 2 to 12 can attain similar operation and effect to those of embodiment 1.

In the cam apparatus 1 set forth so far, the flat regions 16 on the opposite ends and the cam portion 12 of each of the flat cams 14f and 14b form a cam curve for two-dwell motion and the hill-valley shaped region 17 has a wavy shape as a whole which is induced from the cam curve. A modified sine curve, a modified trapezoidal curve or a modified uniform velocity curve can be used as the cam curve. When the indexing angle of the turret 2 is relatively small, the modified sine curve can preferably be used and when the indexing angle of the turret is relatively large, the modified uniform velocity curve can preferably be used.

In embodiment 1, when the modified sine curve as shown in Fig.17 is used and the roller center locus $(X, Y)$ and cam contour $(X', Y')$ are determined on the basis of equations (16), (17), (43) and (44) at 20 equal divisions of the non-dimensional time $T$ (0 to 1), results are obtained as shown in Table 2. It will be appreciated that the range indicated by the non-dimensional time $T$ (0 to 1) corresponds to the range of cam indexing length $x_h$ and dwell sections at the opposite ends of cam stroke are excluded.

Table 2

| T | S | Roller 1 | | | | Roller 2 | | | | Roller 3 | | | | Roller 4 | | | |
|---|---|---|---|---|---|---|---|---|---|---|---|---|---|---|---|---|---|
| | | X | Y | X' | Y' | X | Y | X' | Y' | X | Y | X' | Y' | X | Y | X' | Y' |
| 0.0 | 0.0 | 14.0 | 36.1 | 14.0 | 28.1 | 30.0 | 36.1 | 30.0 | 28.1 | 38.0 | 50.0 | 38.0 | 42.0 | 30.0 | 63.9 | 30.0 | 55.9 |
| 0.05 | 0.001 | 17.5 | 36.2 | 17.6 | 28.2 | 33.5 | 36.1 | 33.3 | 28.1 | 41.5 | 50.0 | 41.2 | 42.0 | 33.5 | 63.8 | 33.4 | 55.8 |
| 0.1 | 0.011 | 20.7 | 36.3 | 21.4 | 28.4 | 36.7 | 36.0 | 36.0 | 28.0 | 45.0 | 49.6 | 43.8 | 41.7 | 37.3 | 63.7 | 36.8 | 55.7 |
| 0.15 | 0.033 | 23.6 | 36.7 | 25.1 | 28.9 | 39.5 | 35.6 | 38.3 | 27.7 | 48.5 | 48.9 | 46.3 | 41.2 | 41.4 | 63.3 | 40.4 | 55.3 |
| 0.2 | 0.068 | 26.1 | 37.4 | 28.9 | 29.9 | 41.9 | 35.1 | 40.1 | 27.4 | 51.8 | 47.7 | 48.7 | 40.4 | 45.9 | 62.6 | 44.4 | 54.7 |
| 0.25 | 0.117 | 28.4 | 38.5 | 32.4 | 31.6 | 43.9 | 34.6 | 41.6 | 26.9 | 55.0 | 46.1 | 51.0 | 39.2 | 50.6 | 61.5 | 48.6 | 53.8 |
| 0.3 | 0.178 | 30.5 | 40.0 | 35.6 | 33.8 | 45.4 | 34.2 | 43.4 | 26.4 | 57.9 | 44.2 | 53.0 | 37.8 | 55.5 | 60.0 | 52.8 | 52.5 |
| 0.35 | 0.249 | 32.7 | 42.0 | 38.3 | 36.2 | 46.5 | 34.0 | 46.5 | 26.0 | 60.4 | 42.0 | 54.8 | 36.3 | 60.3 | 58.0 | 57.0 | 50.8 |
| 0.4 | 0.328 | 35.0 | 44.4 | 40.7 | 38.8 | 47.4 | 34.2 | 51.4 | 27.3 | 62.4 | 39.9 | 56.2 | 34.8 | 65.0 | 55.6 | 61.0 | 48.7 |
| 0.45 | 0.413 | 37.8 | 47.1 | 43.3 | 41.3 | 48.2 | 34.9 | 54.4 | 30.0 | 63.9 | 37.8 | 57.3 | 33.3 | 69.2 | 52.9 | 64.6 | 46.4 |
| 0.5 | 0.5 | 41.0 | 50.0 | 46.2 | 43.9 | 49.0 | 36.1 | 55.7 | 31.8 | 65.0 | 36.1 | 58.3 | 31.8 | 73.0 | 50.0 | 67.8 | 43.9 |
| 0.55 | 0.587 | 44.8 | 52.9 | 49.4 | 46.4 | 50.1 | 37.8 | 56.7 | 33.3 | 65.8 | 34.9 | 59.6 | 30.0 | 76.2 | 47.1 | 70.7 | 41.3 |
| 0.6 | 0.672 | 49.0 | 55.6 | 53.0 | 48.7 | 51.6 | 39.9 | 57.8 | 34.8 | 66.6 | 34.2 | 62.6 | 27.3 | 79.0 | 44.4 | 73.3 | 38.8 |
| 0.65 | 0.751 | 53.7 | 58.0 | 57.0 | 50.8 | 53.6 | 42.0 | 59.2 | 36.3 | 67.5 | 34.0 | 67.5 | 26.0 | 81.3 | 42.0 | 75.7 | 36.2 |
| 0.7 | 0.822 | 58.5 | 60.0 | 61.2 | 52.5 | 56.1 | 44.2 | 61.0 | 37.8 | 68.6 | 34.2 | 70.6 | 26.4 | 83.5 | 40.0 | 78.4 | 33.8 |
| 0.75 | 0.883 | 63.4 | 61.5 | 65.4 | 53.8 | 59.0 | 46.1 | 63.0 | 39.2 | 70.1 | 34.6 | 72.4 | 26.9 | 85.6 | 38.5 | 81.6 | 31.6 |
| 0.8 | 0.932 | 68.1 | 62.6 | 69.6 | 54.7 | 62.2 | 47.7 | 65.3 | 40.4 | 72.1 | 35.1 | 73.9 | 27.4 | 87.9 | 37.4 | 85.1 | 29.9 |
| 0.85 | 0.967 | 72.6 | 63.3 | 73.6 | 55.3 | 65.5 | 48.9 | 67.7 | 41.2 | 74.5 | 35.6 | 75.7 | 27.7 | 90.4 | 36.7 | 88.9 | 28.9 |
| 0.9 | 0.989 | 76.7 | 63.7 | 77.2 | 55.7 | 69.0 | 49.6 | 70.2 | 41.7 | 77.3 | 36.0 | 78.0 | 28.0 | 93.3 | 36.3 | 92.6 | 28.4 |
| 0.95 | 0.999 | 80.5 | 63.8 | 80.6 | 55.8 | 72.5 | 50.0 | 72.8 | 42.0 | 80.5 | 36.1 | 80.7 | 28.1 | 96.5 | 36.2 | 96.4 | 28.2 |
| 1.0 | 1.0 | 84.0 | 63.9 | 84.0 | 55.9 | 76.0 | 50.0 | 76.0 | 42.0 | 84.0 | 36.1 | 84.0 | 28.1 | 100.0 | 36.1 | 100.0 | 28.1 |

## Claims

1. A cam apparatus comprising:
   a rotatable turret serving as a follower member;

a reciprocating engine serving as a drive member for applying power to said turret; and

a slider connected to a piston of said reciprocating engine to convert expansion motion of said piston into rotational motion of said turret and movable, together with said piston, relative to said turret,

wherein said slider is formed with flat portions at opposite end parts and a cam portion shaped to have a hill-valley form at a central part in a direction of travel of said slider, and said turret has a plurality of rollers arranged at the circumferential periphery of said turret and being in contact with said slider so as to roll in accordance with the movement of said slider, whereby said rollers prevent rotation of said turret when said flat portion of said slider is positioned by the expansion motion of said piston to confront said turret but rotation of said rollers cooperate with a procession of said slider and the hill-valley shape of said cam portion to rotate said turret in a rotation direction conforming to the expansion motion of said piston when said cam portion of said slider is moved by the expansion motion of said piston to a position at which said cam portion comes into contact with said rollers of said turret, and said turret is confronted with said flat portion of said slider within the start region or upon stoppage of said reciprocating engine.

2. A cam apparatus according to claim 1 wherein said reciprocating engine is a cylinder.

3. A cam apparatus according to claim 2 wherein the start region of said cylinder in which said turret confronts said flat portion of slider is specified by a moving distance (1) containing, as factors, an accelaration time (t) of said piston and a balanced operation velocity (v) of said piston, and the acceleration time (t), balanced operation velocity (v) and moving distance (l) of said piston are respectively determined by the following equations:

$$v = 1.91(S_2/A_2) \bullet 10^4 \sqrt{273/T}$$
$$t = 6.59\sqrt{WL/(A_1 P_1 - R)} \bullet 10^{-2}$$
$$l = 0.5vt$$

where factors $S_2$, $A_2$, T, W, L, $A_1$, $P_1$ and R in the above equations are as follows:

$S_2$ : exhaust side resultant effective area of the velocity control valve in the operation circuit of cylinder

$A_2$ : cross-sectional area on the intake side for piston of cylinder

T : absolute temperature

W : weight of a body mounted to the tip of piston

L : moving stroke of the body mouted to the tip of piston

$A_1$ : cross-sectional area on the intake side for piston of cylinder

$P_2$ : internal pressure on the intake side of cylinder

R : load on cylinder

4. A cam apparatus according to claim 3 wherein an indexing angle $\tau_h$ of said turret conforming to rectilinear motion of said slider due to expansion motion of said piston is

$60° \leq \tau_h \leq 360°$ (where $\tau_h = 60n$, n:natural number),

the hill-valley of said cam portion of said slider is shaped to have a form for causing said turret to draw a rotational motion curve which is a cam curve for two-dwell motion, and the number of rollers of said turret is six.

5. A cam apparatus according to claim 3 wherein an indexing angle $\tau_h$ of said turret conforming to rectilinear motion of said slider due to expansion motion of said piston is

$45° \leq \tau_h \leq 315°$ (where $\tau_h = 45n$, n:natural number),

the hill-valley of said cam portion of said slider is shaped to have a form for causing said turret to draw a rotational motion curve which is a cam curve for two-dwell motion, and the number of rollers of said turret is eight.

6. A cam apparatus comprising a rotatable turret serving as a follower member and having a plurality of rollers, a rectilinear motion cam which can perform reciprocating rectilinear motion while coming into contact with said rollers of said turret, and a reciprocating engine serving as a motivator member for driving said rectilinear motion cam, said cam apparatus being operative to convert reciprocating motion of said reciprocating engine into rotational motion,

wherein said plurality of rollers have their radi being equal to each other and are arranged on a circumference having the center at a rotary shaft of said turret at equal angular intervals to alternately lie on the right and left sides of the center plane of said turret;

said rectilinear motion cam is comprised of plate cams arranged in parallel to the direction of the reciprocating motion and connected with each other, each of said plate cams being formed with flat portions at opposite end parts and a hill-valley shaped cam portion at a central part in the direction of procession of said cam plate;

at said cam portion of said plate cam, at least one of said plurality of rollers on one side is in contact with a rise stroke of one of said plate cams and at least one of said plurality of rollers on the other side is in contact with a fall stroke of the other plate cam; and

rotation of said rollers cooperates with procession of said rectilinear motion cam due to the reciprocating motion and the hill-valley shape of said cam portion to rotate said turret in a rotation direction conforming to the reciprocating motion.

7. A cam apparatus wherein when an XY coordinate system having -X direction coincident with a direction of procession of a rectilinear motion cam and an XY plane parallel to a rotary plane of a turret is introduced, non-dimensional time T and non-dimensional displacement S are defined by the following equations (45) and (46):

$$T = t/t_h \qquad (45)$$

$$S = S(T), \ 0 \leq T \leq 1, \ 0 \leq S \leq 1 \qquad (46)$$

where

$t$ :   (actually required) time ⟨second⟩

$t_h$ :   time required for reaching maximum displacement ⟨second⟩,

then,

$$\tau_0 = \tau_h(Gn\text{-}3)/Gm \qquad (47)$$

is defined where

$\tau_0$ :   angle which a line segment connecting the center of each roller and the turret center makes to $+X$ direction

$Gn$ :   numbers assigned to rollers participating in the operation of the turret
    $(Gn = 1, 2, \cdots, Gm + 2)$

$\tau_h$ :   indexing angle (rotation angle of the turret in one operation)

$Gm$ :   numbers assigned to rollers, among the plurality of rollers, which interfer with the slider (natural number),

then,

$$Gm = Nr/n \qquad (48)$$

is defined where

$Nr$ :   roller total numnber (the number of rollers mounted to the turret)

$n$ :   division number (number indicated by $360°/\tau_h$),

then,

$$\tau = \tau_h S \qquad (49)$$

is defined where

$\tau$ :   angular displacement of the turret,

then,

$$x = x_h T \qquad (50)$$

is defined where

$x$ :   moving amount of the cam

$x_h$ :   cam allotting length,

then,

$$\phi = \tan^{-1} \left\{ \frac{-b_2 \tau' \cos(\tau_0 - \tau)}{b_2 \tau' \sin(\tau_0 - \tau) + x_h} \right\} \qquad \cdots (51)$$

is defined where

$\phi$ :   gradient angle which the roller center locus makes to $+X$ direction

$\tau'$:   differential of $\tau$ by T,

and then,

$$\tau' = \frac{d\tau}{dT}$$

$$= \frac{d}{dT}(\tau_h \times S)$$

$$= \tau_h V \qquad \cdots (52)$$

is defined where

V :   non-dimensional velocity of cam curve,

contour coordinates (X', Y') of the cam are determined by using coordinates (X, Y) of the roller center locus on the basis of the following equations (53) and (54):

$$X' = X + (d/2)\sin \phi$$

$$= x_0 + b_2 \cos(\tau_0 - \tau) + x + (d/2)\sin \phi \qquad \cdots (53)$$

$$Y' = Y - (d/2)\cos \phi$$

$$= y_0 + b_2 \sin(\tau_0 - \tau) - (d/2)\cos \phi \qquad \cdots (54)$$

where

d :   roller diameter

$(x_0, y_0)$:   the center coordinates relative to the coordinate origin on XY coordinates at non-dimensional time $T = 0$

b :   length of follower radius (length between the turret center and the roller center).

# FIG.1

# FIG.2

EP 0 657 664 A1

# FIG.3

# FIG.4

# FIG.5

# FIG.6

# FIG.7

# FIG.8

# FIG.9

# FIG.10

# FIG.11

# FIG.12

# FIG.13

# FIG.14

# FIG.15

# FIG.16

FIG.17

angular acceleration

(+)

(−)

dwell

dwell

time

# FIG.18

# FIG.19

# FIG.20

EP 0 657 664 A1

# FIG.21

EP 0 657 664 A1

vector formulae for determining contour cooydinates

$$P_4 = C_1 + B_2 + L_3$$

$$\begin{cases} C_1 = x_0 + i y_0 \\ B_2 = b_2 e^{j(\tau_0 - \tau)} \\ L_3 = x \end{cases}$$

$$P_6 = P_4 + B_5$$

$$\begin{cases} P_4 = X + iY \\ B_5 = -j \dfrac{d}{2} e^{j\phi} \end{cases}$$

# FIG.22

FIG.23

# FIG.24

# FIG.25

# FIG.26

# FIG.27

# FIG.28

# FIG.29

# FIG.30

# FIG.31

# FIG.32

# FIG.33

# FIG.34

# FIG.35

EP 0 657 664 A1

# FIG.36

EP 0 657 664 A1

# FIG.37

# FIG.38

velocity characterictics of piston

European Patent
Office

**PARTIAL EUROPEAN SEARCH REPORT**    Application Number

which under Rule 45 of the European Patent Convention EP 94 11 7107
shall be considered, for the purposes of subsequent
proceedings, as the European search report

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN<br>vol. 10, no. 10 (M-446) (2067) 16 January 1986<br>& JP-A-60 172 762 (KIYOUEI GIKEN) 6 September 1985<br>* abstract * | 1,2,6 | F16H25/16<br>F16H53/08<br>F16H27/02 |
| A | US-A-4 109 548 (SHINOHARA) 29 August 1978<br>* the whole document * | 1,6,7 | |
| A | EP-A-0 397 631 (KARLSSON) 14 November 1990<br>* the whole document * | 1,6,7 | |

|  | TECHNICAL FIELDS SEARCHED    (Int.Cl.6) |
|---|---|
|  | F16H<br>F15B |

## INCOMPLETE SEARCH

The Search Division considers that the present European patent application does not comply with
the provisions of the European Patent Convention to such an extent that it is not possible to carry
out a meaningful search into the state of the art on the basis of some of the claims
Claims searched completely :
Claims searched incompletely :
Claims not searched :
Reason for the limitation of the search:

see sheet C

| Place of search | Date of completion of the search | Examiner |
|---|---|---|
| THE HAGUE | 6 March 1995 | Christensen, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................................
& : member of the same patent family, corresponding
    document

EPO FORM 1503 03.82 (P04C07)

EP 94 11 7107

-B-


INCOMPLETE SEARCH

Claims searched  incompletely: 3-5,7

Claimed subject matter is specified  by parameters,
mathematical formulae and ranges of parameters.
Search for novelty is not realisable.